# EUROPÄISCHE PATENTSCHRIFT

(11) **EP 3 339 341 B1**
(45) Veröffentlichungstag und Bekanntmachung des Hinweises auf die Patenterteilung: **08.06.2022**
(21) Anmeldenummer: 17206620.1
(22) Anmeldetag: 03.04.2013
(51) Int. Cl.: C08G 8/28, C04B 24/00, C07D 307/00, C08J 5/00, C07C 59/00, C08G 12/40, C08G 16/02, C08K 13/00

(54) **POLYKONDENSATIONSPRODUKT AUF BASIS VON AROMATISCHEN VERBINDUNGEN, VERFAHREN ZU SEINER HERSTELLUNG UND SEINE VERWENDUNG**
POLYCONDENSATION PRODUCT BASED ON AROMATIC COMPOUNDS, METHOD FOR ITS PREPARATION AND ITS USE
PRODUIT DE POLYCONDENSATION À BASE DE COMPOSÉS AROMATIQUES, SON PROCÉDÉ DE FABRICATION ET SON UTILISATION

(30) Priorität: 11.04.2012 EP 12163706
(43) Veröffentlichungstag der Anmeldung: 27.06.2018
(62) Teilanmeldung aus: 13723007.4
(73) Patentinhaber: Construction Research & Technology GmbH, 83308 Trostberg (DE)
(72) Erfinder: Dierschke, Frank, 83308 Trostberg (DE); Gaedt, Torben, 83308 Trostberg (DE); Gehrig, Uwe, 83308 Trostberg (DE); Melchart, Michael, 83308 Trostberg (DE); Vierle, Mario, 83308 Trostberg (DE); Schwesig, Peter, 83308 Trostberg (DE); Hartl, Klaus, 83308 Trostberg (DE); Stefan, Madalina, 83308 Trostberg (DE); Mitkina, Tatiana, 83308 Trostberg (DE); Pulkin, Maxim, 83308 Trostberg (DE)

(56) Entgegenhaltungen:
- WO-A1-2010/026155
- WO-A1-2010/040612
- WO-A1-2011/026701
- DE-A1- 1 593 758
- DE-A1-102004 050 395
- DE-A1-102005 060 947
- US-A1- 2011 054 053

## Beschreibung

Die vorliegende Erfindung betrifft die Verwendung eines Polykondensationsproduktes, bestehend aus den folgenden Monomerkomponenten, nämlich mindestens einem Arylpolyoxyalkylenether, mindestens einer vicinal disubstituierten aromatischen Verbindung, mindestens einem Aldehyd als Dispergiermittel für wässrige Suspensionen von alkaliaktivierten Alumosilikatbindemitteln.

Portlandzement wurde erstmals im Britischen Patent BP 5022 erwähnt und wurde seither ständig weiterentwickelt. Er gilt heute als eines der verbreitetsten anorganischen Bindemittel. Portlandzement härtet auf Grund seines hohen Gehalts an CaO hydraulisch. Bestimmte Schlacken aus metallurgischen Verfahren können als latent hydraulische Bindemittel als Zumischungen zu Portlandzement verwendet werden. Auch eine Aktivierung mit starken Alkalien wie z.B. Alkalimetallhydroxiden oder Wassergläsern ist möglich. Anorganische Bindemittelsysteme, basierend auf reaktionsfähigen wasserunlöslichen Verbindungen auf der Basis von SiO₂ in Verbindung mit Al₂O₃, die in wässrig alkalischem Medium aushärten, sind ebenfalls allgemein bekannt. Solche ausgehärtete Bindemittelsysteme werden auch "Geopolymere" genannt und sind z.B. in US 4,349,386, WO 85/03699 und US 4,472,199 beschrieben.

Als reaktionsfähiges Oxidgemisch können dabei u.a. Metakaolin, Microsilica, Schlacken, Flugaschen, aktivierter Ton, Puzzolane oder Mischungen daraus eingesetzt werden. Das alkalische Medium zur Aktivierung der Bindemittel besteht üblicherweise aus wässrigen Lösungen von Alkalicarbonaten, Alkalifluoriden, Alkalihydroxiden, Alkalialuminaten und/oder Alkalisilikaten wie z.B. löslichem Wasserglas. Im Vergleich zu Portlandzement können Geopolymere kostengünstiger und beständiger sein und eine günstigere CO₂-Emissionsbilanz aufweisen.

In wässrigen Zementsuspensionen werden oft Zusatzmittel in Form von Dispergiermitteln zugesetzt, um deren Verarbeitbarkeit wie z.B. Knetbarkeit, Fließfähigkeit, Spritzbarkeit, Streichfähigkeit oder Pumpbarkeit zu verbessern. Diese Zusatzmittel sind in der Lage, durch Adsorption an die Oberfläche der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit. Bei der Herstellung von zementhaltigen Baustoffmischungen wie Beton lässt sich dieser Effekt besonders vorteilhaft nutzen, da zur Erzielung einer gut verarbeitbaren Konsistenz ansonsten wesentlich mehr Wasser benötigt würde, als für den nachfolgenden Hydratationsprozess erforderlich wäre. Durch dieses nach dem Erhärten allmählich verdunstende überschüssige Wasser bleiben Hohlräume zurück, welche die mechanische Festigkeit und Beständigkeit der Baukörper signifikant verschlechtern. Die besagten Fließmittel bzw. Dispergiermittel werden eingesetzt, um den im Sinne der Hydratation überschüssigen Wasseranteil zu reduzieren und/oder die Verarbeitbarkeit bei einem vorgegebenen Wasser-Zementwert zu optimieren.

Beispiele für die bisher hauptsächlich verwendeten Zementdispergiermittel bzw. Fließmittel sind Salze von Naphthalinsulfonsäure/Formaldehyd-Kondensaten (vgl. EP 214412 A1, im Folgen als Naphthalinsulfonate bezeichnet), Salze von Melaminsulfonsäure/Formaldehyd-Kondensaten (vgl. DE 1671017 A, im Folgenden als Melaminsulfonate bezeichnet), sowie Salze von Polycarbonsäuren (vgl. US 5,707,445 B1, EP 1110981 A2, EP 1142847 A2; im Folgenden als Polycarboxylate bezeichnet). Solche Polycarboxylate werden meist durch radikalische Copolymerisation von ethylenisch ungesättigten Carbonsäuren (wie z.B. Acrylsäure, Methacrylsäure oder Maleinsäure bzw. deren Salze) und Poly(alkylenoxiden) mit einer polymerisierbaren Endgruppe (wie z.B. Methacrylate, Allylether oder Vinylether) hergestellt. Diese Herstellungsweise führt zu Polymeren mit einer kammartigen Struktur.

Die Wirksamkeit der verwendeten Moleküle beruht auf zwei unterschiedlichen Effekten. Zum einen adsorbieren die negativ geladenen Säuregruppen der Fließmittel auf der durch Calciumionen positiv geladenen Zementkornoberflaeche. Die so entstehende elektrostatische Doppelschicht führt zu einer elektrostatischen Abstoßung zwischen den Partikeln, die jedoch relativ schwach ist. Im Fall der oben erwähnten Kammpolymere wird diese elektrostatische Abstoßung durch den sterischen Anspruch der nicht adsorbierenden Poly(alkylenoxid)-Ketten zusätzlich verstärkt. Diese sterische Abstoßung ist sehr viel stärker als die elektrostatische Abstoßung, so dass leicht zu erklären ist, warum die Verflüssigungswirkung der Polycarboxylate sehr viel stärker ist als die der Naphthalin- oder Melaminsulfonate, d.h. um eine vergleichbare Verflüssigung zu erzielen, kann das Polycarboxylatdeutlich niedriger dosiert werden.

In WO 2006/042709 A1 wird ein Polykondensationsprodukt beschrieben, bestehend aus A) einer aromatischen oder heteroaromatischen Verbindung mit 5 bis 10 C-Atomen bzw. Heteroatomen, wobei diese Verbindung im Durchschnitt 1 bis 300 Oxyethylen- und/oder Oxypropylen-Gruppen pro Molekül besitzt, die über ein O- oder N-Atom mit der aromatischen oder heteroaromatischen Verbindung verknüpft sind; sowie ggf. B) einer aromatischen Verbindung, ausgewählt aus der Gruppe Phenole, Phenolether, Naphthole, Naphtholether, Aniline, Furfurylalkohole und/oder eines Aminoplastbildners ausgewählt aus der Gruppe Melamin(-Derivate), Harnstoff(-Derivate) und Carbonsäureamide; und C) einem Aldehyd ausgewählt aus der Gruppe Formaldehyd, Glyoxylsäure und Benzaldehyd oder Mischungen davon, wobei der Benzaldehyd noch Säuregruppen in Form von COOMₐ, SO₃Mₐ und PO₃Mₐ aufweisen kann und M = H, Alkali- oder Erdalkalimetall, Ammonium oder organische Aminreste sowie a = ½, 1 oder 2 bedeuten können. Es wurde gefunden, dass dieses Polykondensationsprodukt eine sehr gute Verflüssigung hydraulischer Bindemittel wie z.B. Zement, bewirkt. Es führt gegenüber Naphthalinsulfonaten oder Melaminsulfonaten zu einer wesentlich besseren Verflüssigung des Baustoffes bei gleichzeitig geringerer Dosierung, wobei die Fließfähigkeit über einen längeren Zeitpunkt aufrechterhalten werden kann. Allerdings werden in WO 2006/042709 A1 als Komponente B) im Gegensatz zur hier vorliegenden Erfindung keine vicinal disubstituierten aromatischen Verbindungen beschrieben.

Ein weiteres Beispiel für ein Polykondensationsprodukt wird in EP 0780348 A1 als Dispergiermittel für Zement beschrieben. Darin werden u.a. alkoxyliertes Phenol und Hydroxybenzoesäuren in Gegenwart von Formaldehyd einer Polykondensation unterworfen.

DE 15 93758 A1 beschreibt lineare Polykondensate aus Glykolmonophenyläthern und Formaldehyd, nicht jedoch die Verwendung als Dispergiermittel für wässrige Suspensionen von alkaliaktivierten Alumosilikatbindemitteln.

WO2011/02670 A1 offenbart Polykondensationsprodukte, die mindesten eine Polyisobutylenseitenkette aufweisen, Polyoxyalkylen-Seitenketten sind nicht offenbart.

DE 10 2004 050395 A1 beschreibt Polykondensationsprodukte auf Basis von aromatischen oder heteroaromatischen Verbindungen und ihre Verwendung als Fließmittel für hydraulische Bindemittelsysteme. Die Polykondensationsprodukte enthalten als Monomere Arylpolyoxyalkylenether, eine aromatische Monomerverbindung ausgewählt aus der Gruppe Phenole, Phenolether, Naphthole, Naphtholether, Aniline, Furfurylalkohole und/oder eines Aminoplastbildners ausgewählt aus der Gruppe Melamin(-Derivate), Harnstoff(-Derivate) und Carbonsäureamide; und Formaldehyd, allerdings nicht die vicinal disubstituierten aromatischen Monomere B) der Formel (II).

DE 10 2005 060947 A1 betrifft pulverförmige Polykondensationsprodukte auf Basis von aromatischen oder heteroaromatischen Verbindungen, welche bestehen aus einem Arylpolyoxyalkylenethermonomer, Monomeren ausgewählt aus der Gruppe Phenol, Cresol Resorcinal, Bisphenol A, Anilin und einem Aldehyd ausgewählt aus der Gruppe Formaldehyd, Glyoxylsäure, Benzaldehyd und Mischungen davon. Diese werden verwendet als Fließmittel für zementäre Bindemittelsysteme.

WO 2010/026155 A1 betrifft die Herstellung von Calcium-Silikat-Hydrat Kristallisationskeimen, welche zur Beschleunigung des Abbindens von zementären Systemen verwendet werden. Dabei können auch Polykondensationsprodukte zur Dispergierung dieser Keime eingesetzt werden. Als obligatorische Monomerkomponenten in den Polykondensationsprodukten sind Arylpolyoxyalkylenether, Arylalkanolphosphate und eine Aldehydkomponente vorgesehen.

WO2010/040612 A1 offenbart Polykondensationsprodukte als Dispergiermittel für zementäre Bindemittelmischungen, welche (I) mindestens eine einen Aromaten oder Heteroaromaten und eine Polyetherseitenkette aufweisende Struktureinheit und (II) mindestens eine phosphatierte einen Aromaten oder Heteroaromaten aufweisende Struktureinheit und (III) mindestens eine einen Aromaten oder Heteroaromaten aufweisende Struktureinheit enthält, wobei sich Struktureinheit (II) und (III) ausschließlich dadurch unterscheiden, dass die OP(OH)₂- Gruppe der Struktureinheit (II) in Struktureinheit (III) durch H ersetzt und Struktureinheit (III) ungleich Struktureinheit (II) ist.

US2011/054053 A1 beschreibt die Dispergierung gipsbasierter Bindemittel mit Kammpolymeren, Naphthalinsulfonate Formaldehyd Kondensaten (BNS) oder Melaminsulfonat Formaldehyd Kondensaten. Als Kammpolymere können auch Polykondensationsprodukte enthaltend Arylpolyoxyalkylenether, Arylalkanolphosphate und eine Aldehydkomponente eingesetzt werden.

Die eingangs erwähnten Geopolymere weisen deutliche Unterschiede zu den zementären Systemen auf, die den Einsatz der besagten Fließmittel erschweren bzw. unmöglich machen. Um akzeptable Erhärtungszeiten zu erhalten, benötigen die reaktiven Oxidkomponenten eine starke alkalische Aktivierung. Diese hohe Alkalinität stellt besondere Ansprüche an die Dispergiermittel, die bei vielen kommerziellen Betonfließmitteln nicht ausreichend gewährleistet ist. Des Weiteren weisen diese calciumarmen Systeme in der Regel keine positiv geladenen Kornoberflächen auf. Stattdessen handelt es sich um silikatische bzw. SiO₂-Oberflächen. Zudem stellt die zur Aktivierung erforderliche hohe Alkalinität auch eine hohe Salzfracht dar, welche eine bei niedrigeren pH-Werten (vergleichbar zum Zement) mögliche Dispersionswirkung wieder zunichtemachen kann.

Die Erfinder haben sich die Aufgabe gestellt, zumindest einige der Nachteile des oben diskutierten Standes der Technik im Wesentlichen zu vermeiden. Insbesondere sollten Dispergiermittel gefunden werden, die in der Lage sind, bei höheren pH-Werten an calciumarme Bindemittel zu adsorbieren und somit auch Geopolymersysteme zu verflüssigen. Diese Dispergiermittel sollten eine hohe Affinität zu silikatischen Oberflächen aufweisen, vorzugsweise auch bei sehr hohen pH-Werten. Sie sollte idealerweise auch zur Dispergierung von Mischsystemen geeignet sein, welche sowohl Portlandzement als auch Geopolymer-Rohstoffe wie z.B. Microsilica, Schlacken, Flugaschen, Tone, Puzzolane oder Mischungen daraus enthalten (sogenannte "supplemental cementitious materials" bzw. "SCM"), d.h. sie sollten auch für Kompositzemente der Kategorien CEM II-V sowie CEM X (derzeit noch nicht genormte Kompositzemente mit hohem Gehalt an SCM-Zusatzstoffen) geeignet sein.

Die oben genannten Aufgaben werden mit den Merkmalen der unabhängigen Ansprüche gelöst. Die abhängigen Ansprüche betreffen bevorzugteAusführungsformen.

Es wurde überraschend gefunden, dass die erfindungsgemäßen Polykondensationsprodukte, welche mindestens eine vicinal disubstituierte aromatische Monomerkomponente wie z.B. Brenzkatechin, Salicylsäure oder Dihydroxybenzoesäure in der Polymerkette enthalten, in der Lage sind, selbst bei höheren pH-Werten calciumarme anorganische Bindemittel, insbesondere Geopolymere zu dispergieren. Die über Etherbindungen gebundenen Polyoxyalkylengruppen sind zudem wesentlich hydrolysestabiler als die über Esterbindungen gebundenen Polyoxyalkylengruppen der bekannten Polycarboxylatether nach dem Stand der Technik.

Gegenstand der vorliegenden Erfindung ist somit die Verwendung eines Polykondensationsproduktes, bestehend aus den folgenden Monomerkomponenten, nämlich:
A) mindestens einem Arylpolyoxyalkylenether der Formel (I) 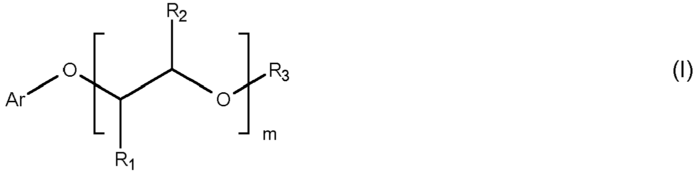 wobei
   Ar eine Arylgruppe ist,
   R₁ und R₂ jeweils unabhängig voneinander aus H, Methyl und Ethyl ausgewählt sind, wobei vorzugsweise mindestens eine der Gruppen R₁ und R₂ = H ist,
   m eine ganze Zahl von 1 bis 300 ist und
   R₃ aus der Gruppe, bestehend aus H, Alkyl, Aryl, Aralkyl, Alkaryl, Phosphat, sowie Mischungen davon ausgewählt ist;
B) mindestens einer aromatischen Verbindung der Formel (II), 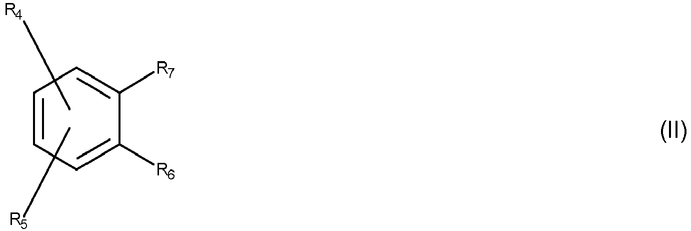 wobei R₄ und R₅ jeweils unabhängig voneinander aus H, R₈, OH, OR₈, C(O)R₈, COOH, COOR₈, SO₃H, SO₃R₈ und NO₂ sowie Alkali-, Erdalkali- und Ammoniumsalzen davon ausgewählt sind, oder zusammen einen weiteren anellierten Ring darstellen, wobei R₈ jeweils unabhängig aus der Gruppe, bestehend aus Alkyl, Aryl, Aralkyl, Alkaryl ausgewählt ist, und R₆ und R₇ jeweils unabhängig voneinander aus OH, OR₉, C(O)R₉, COOH und COOR₉ sowie Alkali- und Erdalkali- und Ammoniumsalzen davon ausgewählt sind, wobei Rg jeweils unabhängig aus der Gruppe, bestehend aus Alkyl, Aryl, Aralkyl, Alkaryl ausgewählt ist; sowie
C) mindestens einem Aldehyd;
als Dispergiermittel für wässrige Suspensionen von alkaliaktivierten Alumosilikatbindemitteln.

Für den Fall, dass mindestens einer der Substituenten in der allgemeinen Formel (II) eine COOH -Gruppe ist, wird bevorzugt, dass die Gruppen R₆ und R₇ jeweils OH -Gruppen sind.

Die Arylgruppe "Ar" ist eine Homo- oder Heteroarylgruppe, vorzugsweise eine Homoarylgruppe, mit 6 bis 10 Kohlenstoffatomen im Ringsystem, insbesondere eine Phenyl- oder eine Naphthylgruppe. Die Gruppe Ar kann noch mit einer oder mehreren weiteren Gruppen substituiert sein, welche aus C₁₋₁₀-Alkyl, C₁₋₁₀-Alkoxy, C₆₋₁₀-Aryl, C₇₋₁₁-Aralkyl, C₇₋₁₁-Alkaryl ausgewählt sind, vorzugsweise Methoxy.

Die Zahl "m" ist vorzugsweise eine ganze Zahl von 3 bis 280, weiter bevorzugt von 10 bis 160 und insbesondere von 12 bis 120.

"R₃" ist vorzugsweise aus der Gruppe, bestehend aus H, C₁₋₁₀-Alkyl, C₆₋₁₀-Aryl, C₇₋₁₁-Aralkyl, C₇₋₁₁-Alkaryl und Phosphat ausgewählt, wobei R₃ insbesondere H ist.

Die Oxyalkylengruppen des Arylpolyoxyalkylenethers der Formel (I) sind vorzugsweise aus Ethylenoxid- und/oder Propylenoxidgruppen ausgewählt, welche statistisch, alternierend, graduell und/oder blockweise entlang der Polyoxyalkylen-Kette angeordnetsind.

Besonders bevorzugt ist der Arylpolyoxyalkylenether der Formel (I) ein Polyethylenglykol-monophenylether der Formel (III), 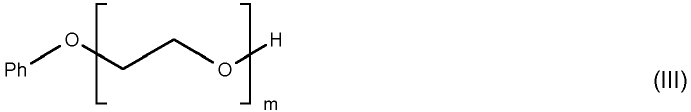 wobei m die angegebene Bedeutung aufweist.

Bei diesem Polyethylenglykol-monophenylether der Formel (III) kann es sich um ein Gemisch mit unterschiedlichen m-Werten innerhalb der vorstehend angegebenen Bedeutung handeln.

Die vorstehend genannten Gruppen "R₈" und "Rg" sind vorzugsweise jeweils unabhängig voneinander aus C₁₋₁₀-Alkyl, C₆₋₁₀-Aryl, C₇₋₁₁-Aralkyl und C₇₋₁₁-Alkaryl ausgewählt und sind insbesondere = H.

Gemäß besonders bevorzugten Ausführungsformen sind die aromatischen Verbindungen der Formel (II) aus der Gruppe, bestehend aus Benzen-1,2-diol, Benzen-1,2,3-triol, 2-Hydroxybenzoesäure, 2,3- und 3,4-Dihydroxybenzoesäure, 3,4,5-Trihydroxybenzoesäure, Phthalsäure, 3- Hydroxyphthalsäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon ausgewählt.

Insbesondere sind hierbei Benzen-1,2-diol, Benzen-1,2,3-triol, 2,3- und 3,4-Dihydroxybenzoesäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon, bevorzugt, während z.B. 2-Hydroxybenzoesäure weniger bevorzugt ist.

Auch hier sind, wie bereits allgemein zur Komponente B ausgeführt, Alkali-, Erdalkali- und Ammoniumsalze der entsprechenden Säuren möglich. Im Sinne der vorliegenden Erfindung sollen unter "Ammoniumsalzen" sowohl NH₄⁺-Salze als auch Salze von Aminen oder stickstoffhaltigen Polymeren wie etwa Polyethyleniminsalzen verstanden werden. Zudem ist es im Hinblick auf das fertige Polykondensationsprodukt gleichwertig, ob die besagten aromatischen Verbindungen direkt als Salze eingesetzt werden oder ob diese Salze erst im Anschluss an eine saure Polykondensation durch Neutralisation erhalten werden. Bei sehr hohen pH-Werten, wie sie im Bereich der Geopolymere anzutreffen sind, können die Amine bzw. stickstoffhaltigen Polymere auch in freier Form vorliegen.

Die Aldehyd-Komponente C) ist vorzugsweise aus der Gruppe, bestehend aus Formaldehyd, Paraformaldehyd, Glyoxylsäure, Benzaldehyd, Benzaldehydsulfonsäure, Benzaldehyddisulfonsäure, Vanillin und Isovanillin, sowie Mischungen davon ausgewählt. Formaldehyd als solcher oder in Form von Paraformaldehyd ist hierbei besonders bevorzugt.

Die Monomerkomponenten A, B und C (abzüglich des bei der Polykondensationsreaktion gebildeten Wassers) liegen im erfindungsgemäßen Polykondensationsprodukt in bestimmten molaren Mengenverhältnissen vor. So beträgt das Molverhältnis der Komponente C:(A+B) vorzugsweise 1:3 bis 3:1, besonders bevorzugt 1:2 bis 2:1 und insbesondere 1:0,9 bis 1:1,1.

Das Molverhältnis der Komponenten A:B beträgt vorzugsweise 1:10 bis 10:1, besonders bevorzugt 1:7 bis 5:1 und insbesondere 1:5 bis 3:1.

Das erfindungsgemäße Polykondensationsprodukt liegt vorzugsweise in Form eines Kammpolymers mit Novolak-Struktur. Mit anderen Worten sind im Falle von Formaldehyd als Aldehyd- Komponente die aromatischen Monomerkomponenten mittels -CH₂-Gruppen untereinander verbunden, da, wie weiter unten ausgeführt wird, die Polykondensationsreaktion vorteilhaft im Sauren durchgeführt wird. Es ergeben sich Molekulargewichte der Polykondensationsprodukte, die bevorzugt im Bereich von 1000 bis 100000, besonders bevorzugt im Bereich von 2000 bis 75000 und insbesondere im Bereich von 4000 bis 50000 g/mol liegen.

Ein weiterer Gegenstand der vorliegenden Erfindung ist ein Verfahren zur Herstellung des erfindungsgemäßen Polykondensationsprodukts, welches dadurch gekennzeichnet ist, dass die Komponenten A), B), C) in wässriger Lösung bei einer Temperatur von 20 bis 140 °C und einem Druck von 1 bis 10 bar polykondensiert werden.

Falls als Monomerkomponente B oder C keine hinreichend starke Säure eingesetzt wird, empfiehlt sich die Verwendung eines sauren Katalysators. Als saurer Katalysator kann eine Säure, ausgewählt aus der Gruppe, bestehend aus Schwefelsäure, Methansulfonsäure, p-Toluolsulfonsäure, Oxalsäure und Phosphorsäure, sowie Mischungen davon eingesetztwerden.

Im Anschluss an die erfindungsgemäße Umsetzung kann das Reaktionsgemisch einer Nachbehandlung bei einem pH-Wert von 8,0 bis 13,0, einer Temperatur von 60 bis 120 °C und vorzugsweise einem Druck von 0,01 bis 0,9 bar unterworfen werden, insbesondere um den Gehalt an unumgesetzter, freier Aldehydkomponente zu reduzieren.

Der besagte pH-Wert kann durch Zugabe einer Lauge wie z.B. NaOH oder z.B. einem Polyethylenimin eingestellt werden und die während der Neutralisation gebildeten Salze werden zweckmäßig abgetrennt.

Gegenstand der vorliegenden Erfindung ist die Verwendung des erfindungsgemäßen Polykondensationsprodukte als Dispergiermittel für wässrige Suspensionen von alkaliaktivierten Alumosilikatbindemitteln.

Hierbei werden die besagten Bindemittel zweckmäßig aus folgenden Gruppen ausgewählt:
die latent hydraulischen Bindemittel aus industriellen und/oder synthetischen Schlacken, insbesondere aus Hochofenschlacke, Hüttensand, Hüttensandmehl, elektrothermischer Phosphorschlacke, Edelstahlschlacke, sowie Mischungen davon,
und die puzzolanischen Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen, sowie Mischungen davon.

Bei den Schlacken kann es sich sowohl um industrielle Schlacken, d.h. Abfallprodukte aus industriellen Prozessen, als auch um synthetisch nachgestellte Schlacken handeln. Letzteres ist vorteilhaft, da industrielle Schlacken nicht immer in gleichbleibender Menge und Qualität verfügbar sind.

Im Sinne der vorliegenden Erfindung soll unter einem latent hydraulischen Bindemittel vorzugsweise ein Bindemittel verstanden werden, bei dem das molare Verhältnis von (CaO + MgO) : SiO₂ zwischen 0,8 und 2,5 und besonders bevorzugt zwischen 1,0 und 2,0 liegt.

Hochofenschlacke, ein typisches latent hydraulisches Bindemittel, weist in der Regel 30 bis 45 Gew.-% CaO, ca. 4 bis 17 Gew.-% MgO, ca. 30 bis 45 Gew.-% SiO₂ und ca. 5 bis 15 Gew.-% Al₂O₃ auf, typischerweise ca. 40 Gew.-% CaO, ca. 10 Gew.-% MgO, ca. 35 Gew.-% SiO₂ und ca. 12 Gew.-% Al₂O₃. Die ausgehärteten Produkte weisen im Allgemeinen die Eigenschaften von hydraulisch ausgehärteten Systemen auf.

Hochofenschlacke ("blast furnace slag") ist ein Abfallprodukt des Hochofenprozesses. Hüttensand ("granulated blast furnace slag") ist granulierte Hochofenschlacke und Hüttensandmehl ("ground granulated blast furnace slag") fein pulverisierter Hüttensand. Das Hüttensandmehl variiert je nach Herkunft und Aufbereitungsform in seiner Mahlfeinheit und Korngrößenverteilung, wobei die Mahlfeinheit Einfluss auf die Reaktivität hat. Als Kenngröße für die Mahlfeinheit wird der sogenannte Blainewert herangezogen, welcher typischerweise in der Größenordnung von 200 bis 1000, vorzugsweise zwischen 300 und 500 m² kg⁻¹ liegt. Je feiner die Vermahlung ist, desto höher ist die Reaktivität.

Elektrothermische Phosphorschlacke ist ein Abfallprodukt der elektrothermischen Phosphorherstellung. Sie ist weniger reaktiv als Hochofenschlacke und enthält ca. 45 bis 50 Gew.-% CaO, ca. 0,5 bis 3 Gew.-% MgO, ca. 38 bis 43 Gew.-% SiO₂, ca. 2 bis 5 Gew.-% Al₂O₃ und ca. 0,2 bis 3 Gew.-% Fe₂O₃ sowie Fluorid und Phosphat. Edelstahlschlacke ist ein Abfallprodukt verschiedener Stahlerzeugungsverfahren mit stark variierender Zusammensetzung (siehe Caijun Shi, Pavel V. Krivenko, Della Roy, Alkali-Activated Cements and Concretes, Taylor & Francis, London & New York, 2006, S. 42-51).

Bei amorpher Kieselsäure handelt es sich vorzugsweise um eine röntgenamorphe Kieselsäure, d.h. um eine Kieselsäure, die im Pulverdiffraktionsverfahren keine Kristallinität zeigt. Die erfindungsgemäße amorphe Kieselsäure weist zweckmäßig einen Gehalt von mindestens 80 Gew.-%, vorzugsweise mindestens 90 Gew.-% SiO₂ auf. Fällungskieselsäure wird großtechnisch über Fällungsprozesse ausgehend von Wasserglas gewonnen. Fällungskieselsäure wird je nach Herstellungsverfahren auch Kieselgel genannt. Pyrogene Kieselsäure wird durch Umsetzung von Chlorsilanen wie z.B. Siliciumtetrachlorid in der Knallgasflamme erzeugt. Pyrogene Kieselsäure ist ein amorphes SiO₂-Pulver von 5 bis 50 nm Teilchendurchmesser und einer spezifischen Oberfläche von 50 bis 600 m²g⁻¹.

Mikrosilika, auch Silikastaub genannt, ist ein Nebenprodukt der Silicium- bzw. Ferrosiliciumherstellung und besteht ebenfalls größtenteils aus amorphem SiO₂-Pulver. Die Teilchen haben Durchmesser in der Größenordnung von 0,1 µm. Die spezifische Oberfläche liegt in der Größenordnung von 15 bis 30 m² g⁻¹. Demgegenüber ist handelsüblicher Quarzsand kristallin und weist vergleichsweise große Teilchen und eine vergleichsweise kleinespezifische Oberfläche auf. Er dient erfindungsgemäß als inerterZuschlagsstoff.

Flugaschen entstehen u.a. beim Verbrennen von Kohle in Kraftwerken. Flugasche der Klasse C (Braunkohleflugasche) enthält gemäß WO 08/012438 ca. 10 Gew.-% CaO, während Flugasche der Klasse F (Steinkohleflugasche) weniger als 8 Gew.-%, vorzugsweise weniger als4 Gew.-% und typischerweise ca. 2 Gew.-% CaO enthält.

Metakaolin entsteht bei der Dehydrierung von Kaolin. Während Kaolin bei 100 bis 200 °C physikalisch gebundenes Wasser abgibt, findet bei 500 bis 800 °C eine Dehydroxylierung unter Zusammenbruch der Gitterstruktur und Bildung von Metakaolin (Al₂Si₂O₇) statt. Reines Metakaolin enthält demgemäß ca. 54 Gew.-% SiO₂ und ca. 46 Gew.-% Al₂O₃.

Eine Übersicht weiterer, erfindungsgemäß geeigneter puzzolanischer Bindemittel findet sich z.B. bei Caijun Shi, Pavel V. Krivenko, Della Roy, Alkali-Activated Cements and Concretes, Tay- lor & Francis, London & New York, 2006, S.51-63. Die Prüfung auf Puzzolanaktivität kann nach DIN EN 196 Teil 5 erfolgen.

Das erfindungsgemäße Polykondensationsprodukt eignet sich also gemäß einer Ausführungsform als Dispergiermittel für alkaliaktivierte Alumosilikatbindemittel (Geopolymere). Gemäß einer anderen Ausführungsform eignet es sich zur Dispergierung von Mischsystemen, welche sowohl Portlandzement als auch Geopolymer-Rohstoffe wie z.B. Microsilica, Schlacken, Flugaschen, Tone, Puzzolane oder Mischungen daraus enthalten (sogenannte SCM), d.h. für Kompositzemente der Kategorien CEM II-V sowie CEM X.

Im Sinne der vorliegenden Erfindung werden unter "alkaliaktivierten Alumosilikatbindemitteln" Bindemittelsysteme verstanden, welche latent hydraulische und/oder puzzolanische Bindemittel gemäß vorstehender Definition sowie alkalische Aktivatoren wie z.B. wässrige Lösungen von Alkalicarbonaten, Alkalifluoriden, Alkalihydroxiden, Alkalialuminaten, Alkalisilikaten (wie z.B. löslichem Wasserglas) und/oder Mischungen davon umfassen. Demgegenüber werden unter "alkaliaktivierbaren Alumosilikatbindemitteln" Bindemittelsysteme der gleichen Art verstanden, welche zwar alkalisch aktivierbar sind aber noch nicht aktiviert wurden. In beiden Fällen sollte der Gehalt an Portlandzement bzw. Aluminatzement insgesamt unter 20 Gew.-%, vorzugsweise unter 10 Gew.-% gehalten werden, damit es nicht zu einer hydraulischen Härtung der Zementkomponente kommt. Des Weiteren soll im Sinne der vorliegenden Erfindung dertrockene alkalische Aktivator bzw. der Feststoffgehalt des wässrigen alkalischen Aktivators dem anorganischen Bindemittel zugerechnet werden. Des Weiteren können auch Mischungen von trockenen alkalischen Aktivatoren und wässrigen alkalischen Aktivatoren vorteilhaft eingesetzt werden.

Das besagte Alkalisilikat ist zweckmäßig aus Verbindungen mit der empirischen Formel m SiO₂· n M₂O ausgewählt, wobei M für Li, Na, K und NH₄, sowie Mischungen davon steht, vorzugsweise für Na und K. Das molare Verhältnis m : n beträgt zweckmäßig 0,5 bis 4,0, vorzugsweise 0,6 bis 3,0 und insbesondere 0,7 bis 2,5. Bei dem Alkalisilikat handelt es sich bevorzugt um Wasserglas, besonders bevorzugt um ein flüssiges Wasserglas und insbesondere um ein Natrium- oder Kaliumwasserglas. Es können aber auch Lithium- oder Ammoniumwassergläser, sowie Mischungen der genannten Wassergläser eingesetzt werden. Das oben angegebene Verhältnis von m:n (auch "Modul" genannt) sollte vorzugsweise nicht überschritten werden, da ansonsten keine vollständige Reaktion der Komponenten mehr zu erwarten ist. Es können auch geringere Module wie z.B. ca. 0,2 zur Anwendung kommen. Wassergläser mit höheren Modulen sollten vor der Anwendung mit einem geeigneten wässrigen Alkalihydroxid auf Module im erfindungsgemäßen Bereich eingestelltwerden.

Kaliumwassergläser sind im zweckmäßigen Modulbereich vornehmlich als wässrige Lösungen im Handel, da sie stark hygroskopisch sind, Natriumwassergläser sind im zweckmäßigen Modulbereich kommerziell auch als Feststoffe erhältlich. Die Feststoffgehalte der wässrigen Wasserglaslösungen liegen in der Regel bei 20 Gew.-% bis 60 Gew.-%, vorzugsweise 30bis 50 Gew.-%.

Wassergläser können industriell durch Schmelzen von Quarzsand mit den entsprechenden Alkalicarbonaten hergestellt werden. Sie können aber auch unschwer aus Mischungen reaktiver Kieselsäuren mit den entsprechenden wässrigen Alkalihydroxiden gewonnen werden. Es ist daher erfindungsgemäß möglich, zumindest einen Teil des Alkalisilikats durch eine Mischung aus einer reaktiven Kieselsäure und dem entsprechenden Alkalihydroxid zu ersetzen.

Das erfindungsgemäße Polykondensationsprodukt kann als Bestandteil von Baustoffrezepturen und/oder Baustofferzeugnissen wie Baustellenbeton, Betonfertigteilen, Betonwaren, Betonwerksteinen sowie Ortbeton, Spritzbeton, Transportbeton, Bauklebern und Wärmedämmverbund- system-Klebern, Betonreparatursystemen, Einkomponenten- und Zweikomponenten-Dichtungs- schlämmen, Estrichen, Spachtel- und Verlaufsmassen, Fliesenklebern, Putzen, Kleb- und Dichtstoffen, Beschichtungssystemen, insbesondere für Tunnel, Abwasserkanäle, Spritzschutz und Kondensatleitungen, Trockenmörteln, Fugenmörteln, Drainagemörteln und/oder Reparaturmörteln verwendet werden.

Die Dosierung der Dispergiermittel sollte bei Zementen der Kategorien CEM I-V sowie CEM X zweckmäßig im Bereich von 0,01 bis 2,0, bevorzugt von 0,05 bis 2,0 Gew.-%, bezogen auf die Summe der anorganischen Bindemittel, erfolgen. (Nicht mitgerechnet werden hier beispielsweise Füllstoffe und Aggregate, wie z.B. Sande und Kiese, sowie Wasser und weitere mögliche Zusatzstoffe.)

Im Falle der Verwendung des erfindungsgemäßen Polykondensationsprodukts als Dispergiermittel für alkaliaktivierte Alumosilikatbindemittel (Geopolymere) sollte indessen wegen der teilweise geringen Dosiereffizienz höher dosiert werden. Die Dosierung der Dispergiermittel sollte hier zweckmäßig im Bereich von 0,01 bis 10,0, bevorzugt von 0,02 bis 5,0 und insbesondere von 0,05 bis 3,0 Gew.-%, bezogen auf die Summe der anorganischen Bindemittel, erfolgen.

### BEISPIELE

### Beispiel 1

Ein beheizbarer, mit Rührer und Dosierpumpe ausgestatteter Reaktor wird mit 320 Teilen Poly(ethylenoxid)monophenylether (mittleres Molekulargewicht 2000 g/mol), 49 Teilen 3,4-Dihydroxybenzoesäure und 16 Teilen Paraformaldehyd bei 90 °C unter Stickstoff befüllt. Das Reaktionsgemisch wird unter Rühren auf 110 °C erhitzt, bis alle Feststoffe gelöst sind, und anschließend werden 44 Teile Methansulfonsäure (70 %-ig - hier und in allen Folgesynthesen als wässrige Lösung) innerhalb von 20 min so zugegeben, dass die Reaktionstemperatur 115°C nicht übersteigt. Nach Dosierende wird die Reaktionsmischung für weitere 3 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 2

Ein beheizbarer, mit Rührer und Dosierpumpe ausgestatteter Reaktor wird mit 300 Teilen Poly(ethylenoxid)monophenylether (mittleres Molekulargewicht 2000 g/mol), 46 Teilen Vanillin (> 99 %, 4-Hydroxy-3-methoxybenzaldehyd) und 14,9 Teilen Paraformaldehyd bei 90 °C unter Stickstoff befüllt. Das Reaktionsgemisch wird unter Rühren auf 110 °C erhitzt, und anschließend werden 51,4 Teile Methansulfonsäure (70 %) innerhalb von 20 min so zugegeben, dass die Reaktionstemperatur 115°C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 3

Ein beheizbarer, mit Rührer und Dosierpumpe ausgestatteter Reaktor wird mit 400 Teilen Poly(ethylenoxid)monophenylether (mittleres Molekulargewicht 5000 g/mol), 24,6 Teilen 3,4-Dihydroxybenzoesäure und 8 Teilen Paraformaldehyd bei 90 °C unter Stickstoff befüllt. Das Reaktionsgemisch wird unter Rühren auf 115 °C erhitzt, und anschließend werden 38,4 Teile Methansulfonsäure (70 %) innerhalb von 10 min so zugegeben, dass die Reaktionstemperatur 115 °C nicht übersteigt. Nach Dosierende wird die Reaktionsmischung für weitere 3 h bei 110 °C gerührt. Danach lässt man abkühlen, versetzt mit 400 Teilen Wasser, erhitzt für 30 min auf 100 °C und neutralisiert mit 50 %-iger Natronlauge auf einen pH-Wert von ca. 7,0.

### Beispiel 4

Ein beheizbarer, mit Rührer und Dosierpumpe ausgestatteter Reaktor wird mit 260 Teilen Poly(ethylenoxid)monophenylether (mittleres Molekulargewicht 2000 g/mol), 43 Teilen Brenzcatechin (1,2-Dihydroxybenzen), 80 Teilen Wasser und 15,6 Teilen Paraformaldehyd bei 80 °C unter Stickstoff befüllt. Dem Reaktionsgemisch werden anschließend 12,5 Teile Methansulfonsäure (50 %) innerhalb von 20 min so zugegeben, dass die Reaktionstemperatur 80 °C nicht übersteigt. Nach Dosierende wird die Reaktionsmischung für weitere 2 h bei 80 °C gerührt. Danach lässt man abkühlen, versetzt mit 350 Teilen Wasser und neutralisiert mit 50 %-iger Natronlauge auf einen pH-Wert von ca. 7,0.

### Beispiel 5 (Vergleichsbsp.)

Ein beheizbarer, mit Rührer und Dosierpumpe ausgestatteter Reaktor wird mit 300 Teilen Poly(ethylenoxid)monophenylether (mittleres Molekulargewicht 2000 g/mol), 46,2 Teilen 3,4-5 Dihydroxybenzoesäure, 33 Teilen 2-Phenoxyethylphosphat und 19,9Teilen Paraformaldehyd bei 90 °C unter Stickstoff befüllt. Das Reaktionsgemisch wird unter Rühren auf 110 °C erhitzt, und anschließend werden 41 Teile Methansulfonsäure (70 %) innerhalb von 25 min so zugegeben, dass die Reaktionstemperatur 115 °C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-igerNatronlauge auf einen pH-Wert von ca. 7,0.

Allgemein erfolgt die Synthese des besagten 2-Phenoxyethylphosphats, indem ein beheizbarer, mit Rührer und Dosierpumpe ausgestatteter Reaktor mit 621,8 Teilen 2-Phenoxyethanol bei 15 20 °C unter Stickstoff befüllt wird. Anschließend werden unter Kühlung 449,7 Teile Polyphosphorsäure über 100 min so zugegeben, dass die Temperatur nicht über 35°C steigt. Nach Dosierende wird die Reaktionsmischung für weitere 15 min bei ca. 70 °C gerührt und vor dem Erstarren abgefüllt.

### Beispiel 6 (Vergleichsbsp.)

Ein beheizbarer, mit Rührer und Dosierpumpe ausgestatteter Reaktor wird mit 300 Teilen Poly(ethylenoxid)monophenylether (mittleres Molekulargewicht 2000 g/mol), 45,7 Teilen Vanillin (> 99%, 4-Hydroxy-3-methoxybenzaldehyd), 32,7 Teilen 2-Phenoxyethylphosphat und 19,9 Teilen Paraformaldehyd bei 90 °C unter Stickstoff befüllt. Das Reaktionsgemisch wird unter Rühren auf 110 °C erhitzt, und anschließend werden 41,1 Teile Methansulfonsäure (70 %) innerhalb von 20 min so zugegeben, dass die Reaktionstemperatur 115 °C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 7 (Vergleichsbsp.)

Ein beheizbarer, mit Rührer und Dosierpumpe ausgestatteter Reaktor wird mit 300 Teilen Poly(ethylenoxid)monophenylether (mittleres Molekulargewicht 2000 g/mol), 45,6 Teilen Isovanillin (3-Hydroxy-4-methoxybenzaldehyd), 33 Teilen 2-Phenoxyethylphosphat und 19,9 Teilen Paraformaldehyd bei 90 °C unter Stickstoff befüllt. Das Reaktionsgemisch wird unter Rühren auf ca. 110 °C erhitzt, und anschließend werden 41 Teile Methansulfonsäure (70 %) innerhalb von 20 min so zugegeben, dass die Reaktionstemperatur 115 °C nicht übersteigt. Nach Dosierende wird die Reaktionsmischung für weitere 2 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 8

Ein beheizbarer, mit Rührer und Dosierpumpe ausgestatteter Reaktor wird mit 300 Teilen Poly(ethylenoxid)monophenylether (mittleres Molekulargewicht 2000 g/mol), 72,1 Teilen 2,3-Dihydroxynaphthalin und 18,0 Teilen Paraformaldehyd bei 80 °C unter Stickstoff befüllt. Dem Reaktionsgemisch werden anschließend 12,5 Teile Methansulfonsäure (50 %) innerhalbvon 30 min so zugegeben, dass die Reaktionstemperatur 80 °C nicht übersteigt. Nach Dosierende wird die Reaktionsmischung für weitere 75 min bei 80 °C gerührt. Danach lässt man abkühlen, versetzt mit 350 Teilen Wasser und neutralisiert mit 50 %-iger Natronlauge auf einen pH-Wert von ca. 7,0.

### Beispiel 9 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol) und 41,5 Teilen 2-Phenoxyethanol befüllt. Anschließend werden unter Kühlung 66,0 Teile Polyphosphorsäure über 30 min zugegeben und 60 min bei 90 - 95 °C gerührt. Zu dieserReaktionsmischung werden 92,5 Teile 3,4-Dihydroxybenzoesäure und 39,8 Teile Paraformaldehyd bei 90 °C unter Stickstoffstrom gegeben. Das Reaktionsgemisch wird unter Rühren auf ca. 100 °C erhitzt, und anschließend werden 57,6 Teile Methansulfonsäure (70 %) innerhalb von 25 min so zugegeben, dass die Reaktionstemperatur 105 °C nicht übersteigt. Nach Dosierende wird die Reaktionsmischung für weitere 15 min bei 100 °C gerührt. Danach lässt man abkühlen, versetzt mit 350 Teilen Wasser und neutralisiert mit 50 %-iger Natronlauge auf einen pH-Wert von ca. 7,0.

### Beispiel 10 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol) und 82,9 Teilen 2-Phenoxyethanol befüllt. Anschließend werden unter Kühlung 99,0 Teile Polyphosphorsäure über 20 min zugegeben und 40 min bei 90 - 95 °C gerührt. Zu dieser Reaktionsmischung wer- den 46,2 Teile 3,4-Dihydroxybenzoesäure und 39,8 Teile Paraformaldehyd bei 90 °C unter Stickstoffstrom gegeben. Das Reaktionsgemisch wird unter Rühren auf ca. 100 °C erhitzt und anschließend werden 57,6 Teile Methansulfonsäure (70 %) innerhalb von 25 minso zugegeben, dass die Reaktionstemperatur 105 °C nicht übersteigt. Nach Dosierende wird die Reaktionsmischung für weitere 15 min bei 100 °C gerührt. Danach lässt man abkühlen, versetzt mit 350 Teilen Wasser und neutralisiert mit Polyethylenimin (Lupasol^{®} G100, BASF SE) auf einen pH-Wert von ca. 7,0.

### Beispiel 11

Es wurden Alumosilikatmörtel nach folgender Rezeptur hergestellt:

| | |
|---|---|
| Microsilica | 150 g |
| Flugasche, Typ F | 150 g |
| Quarzsand | 700 g |
| KOH (0,2 %) | 250 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator diente eine 0,2 Gew.-%-ige wässrige KOH-Lösung. Alle polymeren Dispergiermittel wurden mit dem Entschäumer "Defoamer DF93" der BASF SE oder Triisobutylphosphat entschäumt.

Das Dispergiermittel wurde wie in den obigen Beispielen erhalten als wässrige Lösung eingesetzt. Die Dosierung betrug jeweils 3 g (berechnet als Feststoff). Zum Vergleich wurde das Ausbreitmaß ohne Additiv und mit jeweils 3 g der Polycarboxylatether Melflux^{®}2453 (Vergleichsbeispiel 1), Glenium 51 (Vergleichsbeispiel 2) sowie Melflux PCE 26L (Vergleichsbeispiel 3), alle erhältlich von der BASF SE, bestimmt.

Das Hüttensandmehl und die Flugasche Typ F hatten folgende Zusammensetzung [Gew.-%]:

| | SiO₂ | Fe₂O₃ | TiO₂ | Al₂O₃ | CaO | MgO | K₂O | Rest |
|---|---|---|---|---|---|---|---|---|
| Hüttensand | 34,0 | 0,4 | 1,1 | 11,6 | 43,0 | 7,3 | 0,5 | 2,1 |
| Flugasche | 53,4 | 5,7 | 1,1 | 26,8 | 3,1 | 2,0 | 4,5 | 3,4 |

Das Ausbreitmaß wurde jeweils durch 15-maliges Klopfen auf einem Ausbreitmaßtisch mit Hägermann-Konus bestimmt (DIN EN 1015-3). Die Ergebnisse sind in der Tabelle 1 wiedergegeben.

**Tabelle 1**

| Beispiel | Ausbreitmaß [cm] | Dichte [g/cm³] |
|---|---|---|
| Ohne Additiv | 19,9 | 1,94 |
| Vergleichsbeispiel 1 | 18,4 | 1,83 |
| Vergleichsbeispiel 2 | 18,9 | 1,95 |
| Beispiel 5 (Vergleichsbsp.) | 24,3 | 1,83 |
| Beispiel 6 Vergleichsbsp.) | > 30,0 | 1,85 |
| Beispiel 7 Vergleichsbsp.) | > 30,0 | 1,79 |

### Beispiel 12

Beispiel 11 wurde wiederholt, mit der Abwandlung, dass 5,0 Gew.-%-ige wässrige KOH-Lösung als Aktivator verwendet wurde. Die Ergebnisse sind in der Tabelle 2wiedergegeben.

Rezeptur:

| | |
|---|---|
| Microsilica | 150 g |
| Flugasche, Typ F | 150 g |
| Quarzsand | 700 g |
| KOH (5,0 %) | 262,63 g |

**Tabelle 2**

| Beispiel | Ausbreitmaß [cm] | Dichte [g/cm3] |
|---|---|---|
| Ohne Additiv | 17,5 | 1,96 |
| Vergleichsbeispiel 1 | 19,1 | 1,83 |
| Vergleichsbeispiel 2 | 19,0 | 1,98 |
| Beispiel 1 | 28,4 | 1,96 |
| Beispiel 3 | 23,0 | 1,91 |
| Beispiel 5 (Vergleichsbsp.) | > 30,0 | 1,93 |

### Beispiel 13

Beispiel 11 wurde wiederholt, mit der Abwandlung, in der Rezeptur Hüttensandmehl verwendet wurde. Die Ergebnisse sind in der Tabelle 3 wiedergegeben.

Rezeptur:

| | |
|---|---|
| Hüttensandmehl | 300 g |
| Quarzsand | 700 g |
| KOH (0,2 %) | 250 g |

**Tabelle 3**

| Beispiel | Ausbreitmaß [cm] | Dichte [g/cm3] |
|---|---|---|
| Ohne Additiv | 17,1 | 2,11 |
| Vergleichsbeispiel 1 | 22,7 | 2,00 |
| Beispiel 3 | 25,4 | 2,02 |
| Beispiel 5 (Vergleichsbsp.) | 25,8 | 2,03 |
| Beispiel 6 (Vergleichsbsp.) | > 30,0 | 2,05 |
| Beispiel 7 (Vergleichsbsp.) | > 30,0 | 2,13 |
| Beispiel 8 | 28,2 | 2,06 |

### Beispiel 14

Beispiel 13 wurde wiederholt, mit der Abwandlung, dass 5,0 Gew.-%-ige wässrige KOH-Lösung als Aktivator verwendet wurde. Die Ergebnisse sind in der Tabelle 4 wiedergegeben.

Rezeptur:

| | |
|---|---|
| Hüttensandmehl | 300 g |
| Quarzsand | 700 g |
| KOH (5,0 %) | 189,09 g |

**Tabelle 4**

| Beispiel | Ausbreitmaß [cm] | Dichte [g/cm3] |
|---|---|---|
| Ohne Additiv | 17,4 | 2,12 |
| Vergleichsbeispiel 1 | 17,9 | 1,86 |
| Vergleichsbeispiel 2 | 21,5 | 2,11 |
| Beispiel 1 | 28,4 | 2,09 |
| Beispiel 3 | 28,1 | 2,05 |
| Beispiel 5 (Vergleichsbsp.) | > 30,0 | 2,10 |
| Beispiel 6 (Vergleichsbsp.) | > 30,0 | 2,07 |
| Beispiel 7 (Vergleichsbsp.) | > 30,0 | 2,08 |

### Beispiel 15

Beispiel 14 wurde wiederholt, mit der Abwandlung, dass eine 3,3 Gew.-%-igewässrige Na₂CO₃-Lösung als Aktivator verwendet wurde. Die Ausbreitmaße [in cm] wurden nach 6 min und 30 min ermittelt. Die Ergebnisse sind in der Tabelle 5wiedergegeben.

Rezeptur:

| | |
|---|---|
| Hüttensandmehl | 300 g |
| Quarzsand | 700 g |
| Na₂CO₃ (3,3 %) | 181 g |

**Tabelle 5**

| Beispiel | Ausbreitmaß (6 min) | Ausbreitmaß (30 min) | Dichte [g/cm3] |
|---|---|---|---|
| Ohne Additiv | 17,5 | 16,6 | 2,00 |
| Vergleichsbeispiel 3 | 17,8 | 17,0 | 2,03 |
| Beispiel 9 (Vergleichsbsp.) | 20,4 | 19,9 | 2,01 |
| Beispiel 10 (Vergleichsbsp.) | 19,7 | 18,8 | 1,99 |

### Beispiel 16

Beispiel 15 wurde wiederholt, mit der Abwandlung, dass eine 3,3 Gew.-%-ige wässrige Na₂SiO₃-Lösung als Aktivator verwendet wurde. Die Ausbreitmaße [in cm] wurden nach 6 min und 30 min ermittelt. Die Ergebnisse sind in der Tabelle 6wiedergegeben.

Rezeptur:

| | |
|---|---|
| Hüttensandmehl | 300 g |
| Quarzsand | 700 g |
| Na₂SiO₃ (3,3 %) | 181 g |

**Tabelle 6**

| Beispiel | Ausbreitmaß (6 min) | Ausbreitmaß (30 min) | Dichte [g/cm3] |
|---|---|---|---|
| Ohne Additiv | 17,6 | 16,1 | 1,99 |
| Vergleichsbeispiel 3 | 18,3 | 16,2 | 2,00 |
| Beispiel 9 (Vergleichsbsp.) | 20,0 | 19,0 | 1,97 |
| Beispiel 10 (Vergleichsbsp.) | 19,6 | 18,7 | 1,96 |

Wie aus diesen Anwendungstests deutlich wird, ermöglichen die erfindungsgemäßen Polymere eine deutliche Verbesserung der Konsistenz der Alumosilikat-Mörtel im Vergleich zur Probe ohne Dispergiermittel. Teilweise überschreitet das Fließmaß der Mörtelmischungen durch den Zusatz der erfindungsgemäßen Polymere die Ausmaße der Platte des Klopftisches von 30 cm. Eine Verflüssigungsleistung ist dabei in unterschiedlichen Bindemittelzusammensetzungen und mit verschiedenen Aktivatoren wie KOH, Na₂CO₃ oder Wasserglas erreichbar. Weiterhin ist ersichtlich, dass im Gegensatz zu den Polycarboxylatethern mit den erfindungsgemäßen Polymeren eine Verflüssigung von alkaliaktivierten Alumosilkat-Bindemitteln möglich ist.

### Beispiel 17

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure und 15,9 Teilen Paraformaldehyd bei 90 °C unter Stickstoff befüllt. Das Reaktionsgemisch wird unter Rühren auf 110 °C erhitzt, bis alle Feststoffe gelöst sind, und anschließend werden 66 Teile Methansulfonsäure (70 %) innerhalb von 15 min so zugegeben, dass die Reaktionstemperatur 110 °C nicht übersteigt. Nach Dosierende wird die Reaktionsmischung für weitere 4 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wertvon ca. 7,0.

### Beispiel 18 (Vergleichsbsp.)

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure, 35 Teilen 2-Phenoxyethylphosphat und 21,2 Teilen Paraformaldehyd bei 90 °C unter Stickstoff befüllt. Das Reaktionsgemisch wird unter Rühren auf 110 °C erhitzt, und anschließend werden 44 Teile Methansulfonsäure (70 %) innerhalb von 15 min so zugegeben, dass die Reaktionstemperatur 115 °C nicht übersteigt. Nach Dosierende wird die Reaktionsmischung für weitere 2,75 h bei 110 °C gerührt. Danach lässt man abkühlen, versetzt mit 350 Teilen Wasser, erhitzt für 30 min auf 100 °C und neutralisiert mit 50 %-iger Natronlauge einen pH-Wert von ca. 7,0.

### Beispiel 19 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat, 25 Teilen Wasser und 39,8 Teilen Paraformaldehyd bei 90 °C unter Stickstoff befüllt. Das Reaktionsgemisch wird unter Rühren auf 100°C so zugegeben, dass die Reaktionstemperatur 105 °C nicht übersteigt. Nach Dosierende wird die Reaktionsmischung für weitere 4 h bei 105 °C gerührt. Danach lässt man abkühlen, versetzt mit 400 Teilen Wasser und neutralisiert mit 50 %-iger Natronlauge einen pH-Wert von ca. 7,0.

### Beispiel 20

Ein beheizbarer, mit Rührer und Dosierpumpe ausgestatteter Reaktor wird mit 225 Teilen Poly(ethylenoxid)monophenylether (mittleres Molekulargewicht 750 g/mol), 165,7 Teilen Salicylsäure und 48,4 Teilen Paraformaldehyd bei 90 °C unter Stickstoff befüllt. Das Reaktionsgemisch wird unter Rühren auf 95 °C erhitzt, und anschließend werden 57,6 Teile Methansulfonsäure (50 %) innerhalb von 25 min so zugegeben, dass die Reaktionstemperatur 115 °C nicht übersteigt. Nach Dosierende wird die Reaktionsmischung für weitere 90 min bei 105 °C gerührt. Danach lässt man abkühlen, versetzt mit 300 Teilen Wasser und neutralisiert mit 50 %-iger Natronlauge einen pH-Wert von ca. 7,0.

### Beispiel 21 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat und 127,6 Teilen Formalin (30 %-ig in H₂O) bei 90 °C unter Stickstoff befüllt. Das Reaktionsgemisch wird unter Rühren auf 100 °Cerhitzt, und anschließend werden 85,2 Teile Schwefelsäure (70 %) innerhalb von 20 min so zugegeben, dass die Reaktionstemperatur 105 °C nicht übersteigt. Nach Dosierende wird die Reaktionsmischung für weitere 3 h bei 105 °C gerührt. Danach lässt man abkühlen, versetzt mit 300 Teilen Wasser, erhitzt für 30 min auf 100 °C und neutralisiert mit 50 %-iger Natronlauge einen pH-Wert von ca. 7,0.

### Beispiel 22 (Vergleichsbsp.)

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure, 22,1 Teilen 2-Phenoxyethanol und 21,2 Teilen Paraformaldehyd bei 90 °C unter Stickstoff befüllt. Dem Reaktionsgemisch werden anschließend 43,9 Teile Methansulfonsäure (70 %) innerhalb von 15 min so zugegeben, dass die Reaktionstemperatur 110 °C nicht übersteigt. Nach Dosierende wird die Reaktionsmischung für weitere 1 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 23 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat und 82,3 Teile Methansulfonsäure (70%) bei 95 °C unter Stickstoff befüllt. Das Reaktionsgemisch wird unter Rühren auf ca. 105 °C erhitzt, und anschließend werden 128,2 Teile Formalin (30 %-ig) innerhalb von 70 min so zugegeben, dass die Reaktionstemperatur 110 °C nicht übersteigt. Nach Dosierende wird die Reaktionsmischung für weitere 4,75 h bei 100 °C gerührt. Danach lässt man abkühlen, versetzt mit 300 Teilen Wasser und neutralisiert mit 50 %-iger Natronlauge einen pH-Wert von ca. 7,0.

### Beispiel 24 (Vergleichsbsp.)

Ein beheizbarer, mit Rührer und Dosierpumpe ausgestatteter Reaktor wird mit 263 Teilen Poly(ethylenoxid)monophenylether (mittleres Molekulargewicht 750 g/mol) befüllt und auf 30 °C temperiert. Dann werden innerhalb von 20 min 42 Teile Polyphosphorsäure zugegeben und anschließend für 15 min nachreagiert. Diese Reaktionsmischung wird mit 96,7 Teilen Salicylsäure, 76,4 Teilen 2-Phenoxyethylphosphat, 50 Teilen Wasser und 46,5 Teilen Paraformaldehyd bei 95 °C unter Stickstoff versetzt. Das Reaktionsgemisch wird unter Rühren auf ca.105 °C erhitzt, und dabei werden 66,2 Teile Methansulfonsäure (70 %) innerhalb von 30 min so zugegeben, dass die Reaktionstemperatur 110 °C nicht übersteigt. Nach Dosierende wird die Reaktionsmischung für weitere 3,25 h bei 105 °C gerührt. Danach lässt man abkühlen, versetzt mit 300 Teilen Wasser und neutralisiert mit 50 %-iger Natronlauge einen pH-Wert von ca. 7,0.

### Beispiel 25

Beispiel 12 wurde mit den Salicylsäure-haltigen Polymeren der Beispiele 19 bis 24 wiederholt. Die Ergebnisse sind in der Tabelle 7 wiedergegeben.

Rezeptur:

| | |
|---|---|
| Microsilica | 150 g |
| Flugasche, Typ F | 150 g |
| Quarzsand | 700 g |
| KOH (5,0 %) | 262,63 g |

**Tabelle 7**

| Beispiel | Ausbreitmaß [cm] | Dichte [g/cm3] |
|---|---|---|
| Ohne Additiv | 17,5 | 1,95 |
| Vergleichsbeispiel 1 | 19,1 | 1,83 |
| Vergleichsbeispiel 2 | 19,0 | 1,98 |
| Beispiel 19 (Vergleichsbsp.) | 23,5 | 1,95 |
| Beispiel 21 (Vergleichsbsp.) | ≥ 30,0 | 1,92 |
| Beispiel 23 (Vergleichsbsp.) | ≥ 30,0 | 1,91 |
| Beispiel 24 (Vergleichsbsp.) | 27,3 | 1,94 |

### Beispiel 26

Beispiel 25 wurde wiederholt, mit der Abwandlung, dass 0,2 Gew.-%-igewässrige KOH-Lösung als Aktivator verwendet wurde. Die Ergebnisse sind in der Tabelle8 wiedergegeben.

Rezeptur:

| | |
|---|---|
| Microsilica | 150 g |
| Flugasche, Typ F | 150 g |
| Quarzsand | 700 g |
| KOH (0,2 %) | 250 g |

**Tabelle 8**

| Beispiel | Ausbreitmaß [cm] | Dichte [g/cm3] |
|---|---|---|
| Ohne Additiv | 19,9 | 1,94 |
| Vergleichsbeispiel 1 | 18,4 | 1,83 |
| Vergleichsbeispiel 2 | 18,9 | 1,95 |
| Beispiel 18 (Vergleichsbsp.) | 23,6 | 1,83 |
| Beispiel 19 (Vergleichsbsp.) | 25,4 | 1,85 |
| Beispiel 23 (Vergleichsbsp.) | 25,8 | 1,85 |
| Beispiel 24 (Vergleichsbsp.) | ≥ 30,0 | 1,97 |

### Beispiel 27

Beispiel 13 wurde mit den Salicylsäure-haltigen Polymeren der Beispiele 17 bis 24 wiederholt. Die Ergebnisse sind in der Tabelle 9 wiedergegeben.

Rezeptur:

| | |
|---|---|
| Hüttensandmehl | 300 g |
| Quarzsand | 700 g |
| KOH (0,2 %) | 180 g |

**Tabelle 9**

| Beispiel | Ausbreitmaß [cm] | Dichte [g/cm3] |
|---|---|---|
| Ohne Additiv | 17,1 | 2,11 |
| Vergleichsbeispiel 1 | 22,7 | 2,00 |
| Beispiel 17 | 25,4 | 2,05 |
| Beispiel 18 (Vergleichsbsp.) | ≥ 30,0 | 2,11 |
| Beispiel 19 (Vergleichsbsp.) | 29,3 | 2,05 |
| Beispiel 22 (Vergleichsbsp.) | 22,9 | 1,88 |
| Beispiel 23 (Vergleichsbsp.) | 28,5 | 2,01 |
| Beispiel 24 (Vergleichsbsp.) | 24,7 | 2,12 |

### Beispiel 28

Beispiel 27 wurde wiederholt, mit der Abwandlung, dass 5,0 Gew.-%-ige wässrige KOH-Lösung als Aktivator verwendet wurde. Die Ergebnisse sind in der Tabelle 10 wiedergegeben.

Rezeptur:

| | |
|---|---|
| Hüttensandmehl | 300 g |
| Quarzsand | 700 g |
| KOH (5,0 %) | 189,09 g |

**Tabelle 10**

| Beispiel | Ausbreitmaß [cm] | Dichte [g/cm3] |
|---|---|---|
| Ohne Additiv | 17,4 | 2,12 |
| Vergleichsbeispiel 1 | 17,9 | 1,86 |
| Vergleichsbeispiel 2 | 21,5 | 2,11 |
| Beispiel 17 | 28,4 | 2,09 |
| Beispiel 18 (Vergleichsbsp.) | ≥ 30,0 | 2,13 |
| Beispiel 19 (Vergleichsbsp.) | ≥ 30,0 | 2,09 |
| Beispiel 21 (Vergleichsbsp.) | ≥ 30,0 | 2,06 |
| Beispiel 22 (Vergleichsbsp.) | ≥ 30,0 | 2,00 |
| Beispiel 23 (Vergleichsbsp.) | ≥ 30,0 | 2,08 |
| Beispiel 24 (Vergleichsbsp.) | 29,3 | 2,07 |

### Beispiel 29

Beispiel 28 wurde wiederholt, mit der Abwandlung, dass 15,0 Gew.-%-igewässrige KOH-Lösung als Aktivator verwendet wurde. Die Ergebnisse sind in der Tabelle 11 wiedergegeben.

Rezeptur:

| | |
|---|---|
| Hüttensandmehl | 300 g |
| Quarzsand | 700 g |
| KOH (15 %) | 211,34 g |

**Tabelle 11**

| Beispiel | Ausbreitmaß [cm] | Dichte [g/cm3] |
|---|---|---|
| Ohne Additiv | 18,6 | 2,07 |
| Vergleichsbeispiel 1 | 19,7 | 1,85 |
| Vergleichsbeispiel 2 | 19,4 | 2,05 |
| Beispiel 19 (Vergleichsbsp.) | 23,7 | 2,11 |
| Beispiel 21 (Vergleichsbsp.) | 27,4 | 2,09 |
| Beispiel 24 (Vergleichsbsp.) | ≥ 30,0 | 2,11 |

Wie diese Beispiele zeigen, ermöglichen die erfindungsgemäßen Polymere eine deutliche Verbesserung der Konsistenz der Alumosilikat-Mörtel. Dabei erlauben die erfindungsgemäßen Polymere eine Verbesserung der Konsistenz von Geopolymersystemen mit unterschiedlicher Bindemittelzusammensetzung wie Flugaschen, Microsilica oder Hüttensandmehle als auch verschiedenen Aktivatorlösungen. Zudem ist aus den Tests ersichtlich, dass Standard-Fließmittel wie Polycarboxylatether kaum Wirkung zeigen, während die erfindungsgemäßen Poly- mere eine hervorragende Verflüssigung und somit Wasserreduktionermöglichen.

### Beispiel 30 (Vergleichsbsp.)

Ein beheizbarer, mit Rührer und Dosierpumpe ausgestatteter Reaktor wird mit 262,5 Teilen Poly(ethylenoxid)monophenylether (mittleres Molekulargewicht 750 g/mol) und 48,4 Teilen 2-Phenoxyethanol befüllt. Anschließend werden unter Kühlung 77,0 Teile Polyphosphorsäure über 15 min zugegeben und 45 min bei ca. 95 °C gerührt. Zu dieserReaktionsmischung werden 96,7 Teile Salicylsäure, 50 Teile Wasser und 46,5 Teile Paraformaldehyd bei ca. 90 °C unter Stickstoffstrom gegeben. Das Reaktionsgemisch wird unter Rühren auf ca. 90 °C aufgeheizt und anschließend werden 67,3 Teile Methansulfonsäure (70 %) innerhalb von 30 min so zugegeben, dass die Reaktionstemperatur 110 °C nicht übersteigt. Nach Dosierende wird die Reaktionsmischung für weitere 120 min bei ca. 100 °C gerührt. Danach lässt man abkühlen, versetzt mit 350 Teilen Wasser und neutralisiert mit Natronlauge (50 %) auf einen pH-Wert von ca. 7,0. Das neutralisierte Dispergiermittel liegt als ca. 35,0 Gew.-%-ige wässrige Lösung vor.

### Beispiel 31 (Vergleichsbsp.)

Ein beheizbarer, mit Rührer und Dosierpumpe ausgestatteter Reaktor wird mit 225 Teilen Poly(ethylenoxid)monophenylether (mittleres Molekulargewicht 750 g/mol) und 82,9 Teilen 2-Phenoxyethanol befüllt. Anschließend werden unter Kühlung 99,0 Teile Polyphosphorsäure über 35 min zugegeben und 60 min bei ca. 90 - 95 °C gerührt. Zu dieser Reaktionsmischung werden 41,4 Teile Salicylsäure, 40 Teile Wasser und 39,8 Teile Paraformaldehyd unter Stickstoffstrom gegeben. Das Reaktionsgemisch wird unter Rühren auf ca. 85 °C erhitzt und anschließend werden 57,7 Teile Methansulfonsäure (70 %) innerhalb von 35 min so zugegeben, dass die Reaktionstemperatur 105 °C nicht übersteigt. Nach Dosierende wird die Reaktionsmischung für weitere 140 min bei 100 °C gerührt. Danach lässt man abkühlen, versetzt mit 350 Teilen Wasser und neutralisiert mit Polyethylenimin (Lupasol^{®}G100 der BASF SE) auf einen pH-Wert von ca. 7,0. Das neutralisierte Dispergiermittel liegt als ca. 30,4Gew.-%-ige wässrige Lösung vor.

### Beispiel 32

Es wurden Alumosilikatmörtel nach folgender Rezeptur hergestellt:

| | |
|---|---|
| Microsilica | 150 g |
| Flugasche, Typ F | 150 g |
| Quarzsand | 700 g |
| Na₂Al₂O₄ | 15 g |
| Entschäumer | 0,12 g |
| Wasser gesamt | 250 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator diente das im Anmachwasser gelöste Natriumaluminat. Als Entschäumer wurde das Produkt "Defoamer DF40" der BASF SE eingesetzt. Das Dispergiermittel als Polymerfeststoffgehalt).

Die Flugasche vom Typ F und das Microsilica hatten folgende Zusammensetzung [Gew.-%]:

| | SiO₂ | Fe₂O₃ | TiO₂ | Al₂O₃ | CaO | MgO | K₂O | Rest |
|---|---|---|---|---|---|---|---|---|
| Flugasche | 53,4 | 5,7 | 1,1 | 26,8 | 3,1 | 2,0 | 4,5 | 3,4 |
| Microsilica | 98,1 | 0,0 | 0,0 | 0,0 | 0,23 | 0,2 | 0,77 | 0,7 |

Das Ausbreitmaß nach 6 Minuten wurde jeweils durch 15-maliges Klopfen auf einem Ausbreitmaßtisch mit Hägermann-Konus bestimmt (DIN EN 1015-3). Die Ergebnisse sind in der Tabelle 12 wiedergegeben.

**Tabelle 12**

| | Referenz | Beispiel 30 | Beispiel 31 |
|---|---|---|---|
| Dispergiermittel | 0,0 g | 3,0 g | 3,0 g |
| Ausbreitmaß | 18,6 cm | 27,5 cm | 27,3 cm |

Diese Tabelle zeigt, dass die erfindungsgemäßen Dispergiermittel auch in Kombination mit Natriumaluminat als alkalischer Aktivator eine deutliche Verbesserung der Ausbreitmaße der Alumosilikat-Mörtelmischungen ermöglichen. Dabei wird eine Verbesserung der Konsistenz sowohl durch Na-Salze als auch durch Polyethylenimin-Salze der erfindungsgemäßen Polymere erzielt.

### Beispiel 33

Beispiel 3 wurde wiederholt. Man erhielt ein vollständig wasserlösliches braunes Polymer mit einem Molekulargewicht (max. Peak) Mp = 24,3 kDa (Säulenkombinationen: OH-Pak SB-G, OH-20 Pak SB 804 HQ und OH-Pak SB 802.5 HQ von Shodex, Japan; Elutionsmittel: 80 Vol.-% wässrige Ammoniumformiat-Lösung (0,05 mol/l) und 20 Vol.-% Acetonitril; Injektionsvolumen 100 µl; Durchflussrate 0,5 ml/min).

### Beispiel 34 (Vergleichsbsp.)

Ein beheizbarer, mit Rührer, Rückflusskühler und Dosierpumpe ausgestatteter Reaktorwird mit 150 Teilen Poly(ethylenoxid)monophenylether (mittleres Molekulargewicht 750 g/mol), 101 Teilen Hydrochinon-bis-(2-hydroxyethyl)-ether und 28 Teilen Salicylsäure befüllt und auf 90 °C unter Stickstoff temperiert. Dann werden innerhalb von 33 min 132 Teile Polyphosphorsäure zugegeben und anschließend für 10 min nachreagiert. Diese Reaktionsmischung wird mit 48 Teilen Methansulfonsäure (70 %) und 2 Teilen Wasser bei 98 °C versetzt. Das Reaktionsgemisch wird unter Rühren auf ca. 90 °C abgekühlt, und dabei werden 95 Teile Formalinlösung (30 %) innerhalb von 50 min so zugegeben, dass die Reaktionstemperatur 110 °C nicht übersteigt. Nach Dosierende wird die Reaktionsmischung für weitere 20 Min bei 100 °C gerührt. Danach lässt man abkühlen, versetzt mit 760 Teilen Wasser und neutralisiert mit 50 %-igerNatronlauge bis auf einen pH-Wert von ca. 7,3.

### Beispiel 35 (Vergleichsbsp.)

Ein beheizbarer, mit Rührer, Rückflusskühler und Dosierpumpe ausgestatteter Reaktor wird mit 188 Teilen Poly(ethylenoxid)monophenylether (mittleres Molekulargewicht 750 g/mol) und 35 Teilen Phenoxyethanol befüllt und auf 25 °C unter Stickstoff temperiert. Dann werden innerhalb von 8 min 55 Teile Polyphosphorsäure zugegeben, anschließend wirddie Reaktionsmischung bis 92 °C erhitzt und 100 min bei dieser Temperatur nachreagiert. Das Reaktionsgemisch wird mit 104 Teilen Salicylsäure und 69 Teilen Methansulfonsäure (70%) versetzt und nach 10 Min werden 131 Teile Formalinlösung (30 %) innerhalb von 60 min so zugegeben, dass die Reaktionstemperatur 110 °C nicht übersteigt. Nach Dosierende wird die Reaktionsmischung für weitere 3,5 h bei 100 °C gerührt. Danach lässt man abkühlen, versetzt mit 500Teilen Wasser und neutralisiert mit 50 %-iger Natronlauge bis auf einen pH-Wert von ca. 7,3.

### Beispiel 36 (Vergleichsbsp.)

Ein beheizbarer, mit Rührer, Rückflusskühler und Dosierpumpe ausgestatteter Reaktor wird mit 188 Teilen Poly(ethylenoxid)monophenylether (mittleres Molekulargewicht 750g/mol) befüllt, und dazu werden innerhalb von 8 min 28 Teile Polyphosphorsäure unter Stickstoff zugegeben. Nach 10 min ab Dosierende wird die Reaktionsmischung unter Rühren bis 90 °C erhitzt und 4 Stunden bei ca. 95°C nachreagiert. Anschließend werden 35 Teile Phenoxyethanol und noch 30 min später 104 Teile Salicylsäure und 69 Teile Methansulfonsäure (70%) zugegeben. Das Reaktionsgemisch wird unter Rühren auf ca. 100 °C erhitzt und ab Erreichen dieser Temperatur werden 132 Teile Formalinlösung (30 %) innerhalb von 50 min so zugegeben, dass die Reaktionstemperatur 110 °C nicht übersteigt. Nach Dosierende wird die Reaktionsmischung für weitere 3,7 h bei 95 °C gerührt. Danach lässt man abkühlen, versetzt mit 450 Teilen Wasser und neutralisiert mit 50 %-iger Natronlauge bis auf einen pH-Wert von ca. 7,3.

### Beispiel 37 (Vergleichsbsp.)

Ein beheizbarer, mit Rührer, Rückflusskühler und Dosierpumpe ausgestatteter Reaktor wird mit 135 Teilen Poly(ethylenoxid)monophenylether (mittleres Molekulargewicht 750 g/mol) befüllt, und dazu werden innerhalb von 6 min 20 Teile Polyphosphorsäure unter Stickstoff zugegeben. Nach 10 min ab Dosierende wird die Reaktionsmischung unter Rühren bis 90 °C erhitzt und 4 Stunden bei ca. 95°C nachreagiert. Anschließend werden 50 Teile Phenoxyethanol und noch 15 min später 149 Teile Salicylsäure und 99 Teile Methansulfonsäure (70%) zugegeben. Das Reaktionsgemisch wird unter Rühren auf ca. 90 °C erhitzt und ab Erreichen dieser Temperatur werden 170 Teile Formalinlösung (30 %) innerhalb von 60 min so zugegeben, dass die Reaktionstemperatur 110 °C nicht übersteigt. Nach Dosierende wird die Reaktionsmischung für weitere 2,75 h bei 95 °C gerührt. Danach lässt man abkühlen, versetzt mit 500 Teilen Wasser und neutralisiert mit 50 %-iger Natronlauge bis auf einen pH-Wert von ca. 7,3.

### Beispiel 38

Es wurden Alumosilikatmörtel nach folgender Rezeptur hergestellt:

| | | |
|---|---|---|
| Hüttensandmehl | | 300 g |
| Quarzsand | | 700 g |
| KOH | 12 g | |
| Na₂CO₃ | | 12 g |
| Entschäumer | 0,12 g | |
| Wasser gesamt | | 175 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator dienten das im Anmachwasser gelöste Kaliumhydroxyd und Natriumkarbonat. Als Entschäumer wurde das Produkt "Defoamer DF93" der BASF SE eingesetzt. Das Dispergiermittel wurde, wie in den Beispielen 1 und 2 erhalten, als wässrige Lösung eingesetzt (Polymerfeststoffgehalt in der Mörtelmischung: 3g).

Das Hüttensandmehl hatte folgende Zusammensetzung [Gew.-%]:

| SiO₂ | | Fe₂O₃ | TiO₂ | Al₂O₃ | CaO | MgO | K₂O | Rest |
|---|---|---|---|---|---|---|---|---|
| Hüttensand | 33,1 | 0,6 | 0,6 | 15,0 | 41,3 | 6,1 | 0,3 | 3,0 |

Das Ausbreitmaße nach 6 Minuten und nach 30 Minuten wurden jeweils durch 15-maliges Klopfen auf einem Ausbreitmaßtisch mit Hägermann-Konus bestimmt (DIN EN 1015-3). Die Ergebnisse sind in der Tabelle 13 wiedergegeben.

**Tabelle 13**

| Beispiel | Ausbreitmaß nach 6 min [cm] | Ausbreitmaß nach 30 min [cm] | Dichte [g/cm³] |
|---|---|---|---|
| Ohne Additive | 15,7 | 15,2 | 1,98 |
| Vergleichsbeispiel (Melflux 2424) | 16,6 | 15,5 | 1,96 |
| Beispiel 34 (Vergleichsbsp.) | 16,6 | 16,3 | 2,05 |
| Beispiel 35 (Vergleichsbsp.) | 20,8 | 20,6 | 2,02 |
| Beispiel 36 (Vergleichsbsp.) | 23,7 | 23,3 | 2,08 |
| Beispiel 37 (Vergleichsbsp.) | 24,6 | 24,0 | 2,08 |

### Beispiel 39

In einem Metallgefäß wurden 100,0 g eines Hüttensandkompositzementes vom Typ CEM III/A 32,5 N eingewogen. Die unten angegebene Menge an Dispergiermittel, berechnet als Feststoffgehalt, wurden unter Einrechnung des im Dispergiermittel enthaltenen Wassers mit der Menge Wasser vermischt, die einem Wasser/Zementwert von 0,3 entsprach. In diesem Zusammenhang soll der Ausdruck "bwoc" "Gew.-%, bezogen auf die Zementmenge" bedeuten. Nach Zugabe des Wasser/Dispergiermittelgemisches zum Zement wurde die Mischung 1 min per Flügelrührer intensiv gerührt. Der so erhaltene Zementleim wurde in einen Metallkonus (Innendurchmesser oben/unten 2,0/4,0 cm, Höhe 6,0 cm), der sich auf einer horizontal angeordneten Glasplatte befand, eingefüllt. Der Metallkonus wurde abgehoben, wobei sich der Zementleim ausbreitete. Anschließend wurde das Ausbreitmaß ("ABM", Durchmesser des Zementleimfladens) an 3 Stellen bestimmt und der Mittelwert herangezogen. Die gemittelten Werte sind in der Tabelle 14 wiedergegeben. (Glenium^{®} SKY 115 ist ein kommerzielles Hochleistungsdispergiermittel der BASF Construction Polymers GmbH auf Polycarboxylatetherbasis.)

**Tabelle 14**

| | Dispergiermittel | Dosierung [g] | Dosierung [bwoc] | ABM [cm] |
|---|---|---|---|---|
| Vergleich 1 | Glenium^{®} SKY 115 | 0,67 | 0,67% | 10,8 |
| Vergleich 2 | Glenium^{®} SKY 115 | 0,34 | 0,34% | < 8 |
| Beispiel 39 | Glenium^{®} SKY 115 Polykondensationsprodukt | 0,34 0,53 | 0,87% | 10,6 |

Es zeigte sich, dass das Referenzausbreitmaß des Zementleims aus Vergleich 1 bei einer Halbierung der zugesetzten Menge an Hochleistungsdispergiermittel (Vergleich 2) erwartungsgemäß nicht erreicht werden konnte. Erst durch Zugabe des erfindungsgemäßen Polykondensationsprodukts (Beispiel 33) konnte das Ausbreitmaß wieder nahezu auf Referenzniveau angehoben werden.

Eine definierte Menge des so erhaltenen Zementleims wurde jeweils in ein Kalorimeter überführt und die Entwicklung der Hydratationswärme kalorimetrisch aufgezeichnet. Hierzu wurde das Kalorimeter zuvor (Isothermales Referenzkalorimeter der Fa. TA Instruments, Modell TAM-AIR) auf 20,0°C equilibriert. Nach 48 Stunden wurde die Messung gestoppt und die Daten ausgewertet. Hierzu wurde die differentielle Wärmeentwicklung dH/dt (mW/g, normiert auf 1g Zementleim) und ebenso die integrale Wärmeentwicklung H (J/g; nach 6, 12, 24 und 48 Stunden) herangezogen. Die Ergebnisse sind in der Tabelle 15 wiedergegeben.

**Tabelle 15**

| | dH/dt max. [mW/g] bei t [h, min] | H [J/g] | | | |
|---|---|---|---|---|---|
| | | 6 h | 12 h | 24 h | 48 h |
| Vergleich 1 | 1,58 / 23 h, 54 min | 5,52 | 10,96 | 47,60 | 146,11 |
| Beispiel 39 | 1,66 / 18 h, 54 min | 5,76 | 13,48 | 71,59 | 157.00 |

Es zeigte sich, dass durch die Verwendung des Polykondensationsprodukts aus Beispiel 33 eine deutlich schnellere Hydratation erreicht werden konnte. Trotz einer insgesamt höheren Polymerdosierung wurde eine deutlich schnellere Wärmefreisetzung beobachtet, was auf eine schnellere Hydratation des Zementes schließen lässt. Das Maximum der Wärmeentwicklung des Zementleims, der unter Verwendung des erfindungsgemäßen Polykondensationsprodukts formuliert wurde, wurde bereits bei 18h und 54 Minuten erreicht, während der Zementleim, der unter Verwendung des kommerziellen Hochleistungsbetonverflüssigers formuliert wurde, erst 5 Stunden später die maximale Wärmeentwicklung erreichte. Dies spiegelt sich auch in der integralen Wärmeentwicklung wider; nach jeweils 6, 12, 24 und 48 Stunden konnten stets höhere Wärmeentwicklungen beobachtet werden.

### Beispiel 40

In einem Metallgefäß wurden 100,0 g eines Hüttensand/Flugaschekompositzementes Typ CEM V/A 32,5 N eingewogen. Die unten angegebene Menge an Dispergiermittel, berechnet als Feststoffgehalt, wurden unter Einrechnung des im Dispergiermittel enthaltenen Wassers mit der Menge Wasser vermischt, die einem Wasser/Zementwert von 0,33 entsprach. Nach Zugabe des Wasser/Dispergiermittelgemisches zum Zement wurde die Mischung 1 min per Flügelrührer intensiv gerührt. Der so erhaltene Zementleim wurde in einen Metallkonus (Innendurchmesser oben/unten 2,0/4,0 cm, Höhe 6,0 cm), der sich auf einer horizontal angeordneten Glasplatte befand, eingefüllt. Der Metallkonus wurde abgehoben, wobei sich der Zementleim ausbreitete. Anschließend wurde das Ausbreitmaß an 3 Stellen bestimmt und der Mittelwert herangezogen. Die gemittelten Werte sind in der Tabelle 16wiedergegeben.

**Tabelle 16**

| | Dispergiermittel | Dosierung [g] | Dosierung [bwoc] | ABM [cm] |
|---|---|---|---|---|
| Vergleich 3 | Glenium^{®} SKY 115 | 0,67 | 0,67% | 17,0 |
| Beispiel 40 | Glenium^{®} SKY 115 | 0,34 | 0,67% | 15,9 |
| | Polykondensationsprodukt | 0,33 | | |

Es zeigte sich, dass das Referenzausbreitmaß des Zementleims aus Vergleich 3 bei einer Halbierung der zugesetzten Menge an Hochleistungsdispergiermittel und Zugabe des erfindungsgemäßen Polykondensationsprodukts nahe an das Referenzniveau angehoben werden konnte.

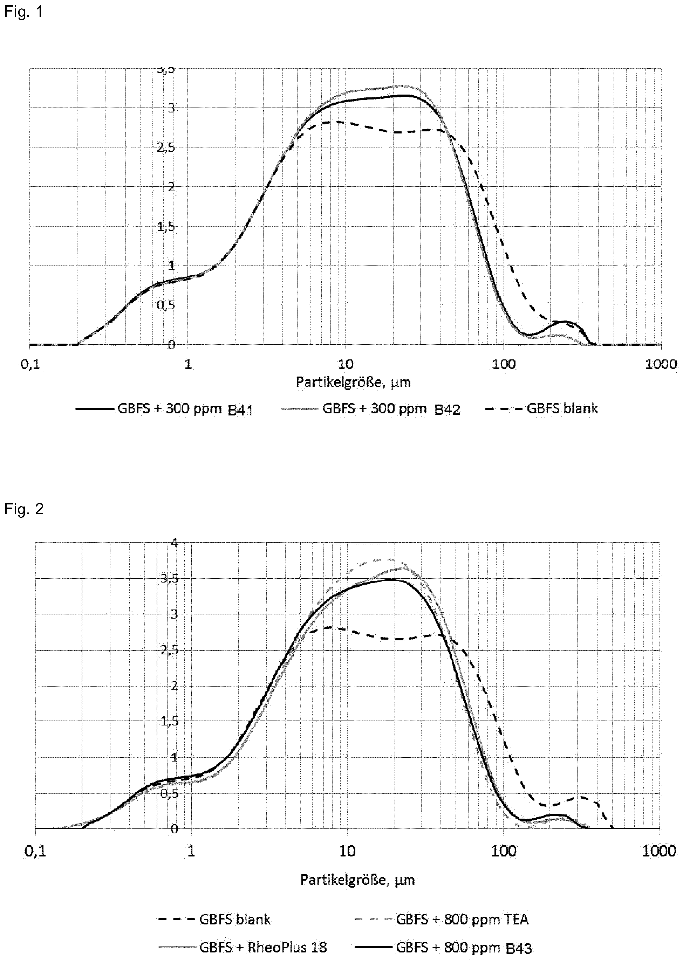

## Patentansprüche

1. Verwendung eines Polykondensationsproduktes, bestehend aus den folgenden Monomerkomponenten, nämlich:
A) mindestens einem Arylpolyoxyalkylenether der Formel (I) 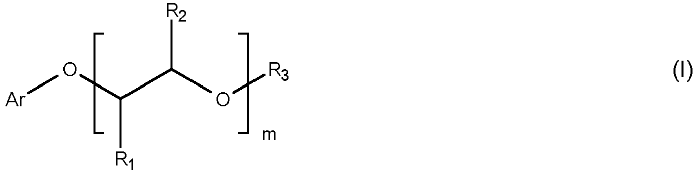 wobei
Ar eine Arylgruppe ist,
R₁ und R₂ jeweils unabhängig voneinander aus H, Methyl und Ethyl ausgewählt sind, wobei vorzugsweise mindestens eine der Gruppen R₁ und R₂ = H ist,
m eine ganze Zahl von 1 bis 300 ist und
R₃ aus der Gruppe, bestehend aus H, Alkyl, Aryl, Aralkyl, Alkaryl, Phosphat, sowie Mischungen davon ausgewählt ist;
B) mindestens einer aromatischen Verbindung der Formel (II), 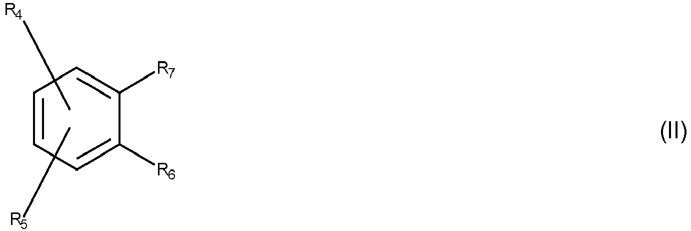 wobei R₄ und R₅ jeweils unabhängig voneinander aus H, R₈, OH, OR₈, C(O)R₈, COOH, COOR₈, SO₃H, SO₃R₈ und NO₂ sowie Alkali-, Erdalkali- und Ammoniumsalzen davon ausgewählt sind, oder zusammen einen weiteren anellierten Ring darstellen, wobei R₈ jeweils unabhängig aus der Gruppe, bestehend aus Alkyl, Aryl, Aralkyl, Alkaryl ausgewählt ist, und R₆ und R₇ jeweils unabhängig voneinander aus OH, OR₉, C(O)R₉, COOH und COOR₉ sowie Alkali- und Erdalkali- und Ammoniumsalzen davon ausgewählt sind, wobei Rg jeweils unabhängig aus der Gruppe, bestehend aus Alkyl, Aryl, Aralkyl, Alkaryl ausgewählt ist; sowie
C) mindestens einem Aldehyd;
als Dispergiermittel für wässrige Suspensionen von alkaliaktivierten Alumosilikatbindemitteln.

2. Verwendung nach Anspruch 1, **dadurch gekennzeichnet, dass** die Gruppe Ar eine Arylgruppe mit 6 bis 10 Kohlenstoffatomen im Ringsystem ist, insbesondere eine Phenyl- oder eine Naphthylgruppe.

3. Verwendung nach Anspruch 1 oder 2, **dadurch gekennzeichnet, dass** m eine ganze Zahl von 3 bis 280 ist, vorzugsweise von 10 bis 160 und insbesondere von 12 bis 120.

4. Verwendung nach einem der Ansprüche 1 bis 3, **dadurch gekennzeichnet, dass** R₃ aus der Gruppe, bestehend aus H, C₁₋₁₀-Alkyl, C₆₋₁₀-Aryl, C₇₋₁₁-Aralkyl, C₇₋₁₁-Alkaryl und Phosphat ausgewählt ist, wobei R₃ vorzugsweise H ist.

5. Verwendung nach Anspruch 3, **dadurch gekennzeichnet, dass** die Oxyalkylengruppen des Arylpolyoxyalkylenethers der Formel (I) aus Ethylenoxid- und/oder Propylenoxidgruppen ausgewählt sind, welche statistisch, alternierend, graduell und/oder blockweise entlang der Kette angeordnet sind.

6. Verwendung nach Anspruch 3, **dadurch gekennzeichnet, dass** der Arylpolyoxyalkylenether der Formel (I) ein Polyethylenglykol-monophenylether der Formel (III) ist, 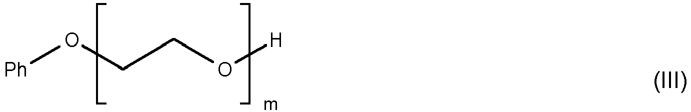 wobei m die angegebene Bedeutung aufweist.

7. Verwendung nach Anspruch 6, **dadurch gekennzeichnet, dass** der Polyethylenglykol-monophenylether der Formel (III) ein Gemisch mit unterschiedlichen m-Werten innerhalb der angegebenen Bedeutung ist.

8. Verwendung nach einem der Ansprüche 1 bis 7, **dadurch gekennzeichnet, dass** R₈ und R₉ jeweils unabhängig aus C₁₋₁₀-Alkyl, C₆₋₁₀-Aryl, C₇₋₁₁-Aralkyl und C₇₋₁₁-Alkaryl ausgewählt sind und vorzugsweise H sind.

9. Verwendung nach einem der Ansprüche 1 bis 8, **dadurch gekennzeichnet, dass** die aromatische Verbindung der Formel (II) aus der Gruppe, bestehend aus Benzen-1,2-diol, Benzen-1,2,3-triol, 2-Hydroxybenzoesäure, 2,3- und 3,4-Dihydroxybenzoesäure, 3,4,5-Trihydroxybenzoesäure, Phthalsäure, 3-Hydroxyphthalsäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon ausgewählt ist.

10. Verwendung nach einem der Ansprüche 1 bis 9, **dadurch gekennzeichnet, dass** die Aldehyd-Komponente C) aus der Gruppe, bestehend aus Formaldehyd, Paraformaldehyd, Glyoxylsäure, Benzaldehyd, Benzaldehydsulfonsäure, Benzaldehyddisulfonsäure, Vanillin und Isovanillin, sowie Mischungen davon ausgewählt ist.

11. Verwendung nach einem der Ansprüche 1 bis 10, **dadurch gekennzeichnet, dass** das Molverhältnis der Komponente C:(A+B) von 1:3 bis 3:1, vorzugsweise 1:2 bis 2:1 und insbesondere 1:0,9 bis 1:1,1 beträgt.

12. Verwendung nach einem der Ansprüche 1 bis 11, **dadurch gekennzeichnet, dass** das Molverhältnis der Komponenten A:B von 1:10 bis 10:1, vorzugsweise 1:7 bis 5:1 und insbesondere 1:5 bis 3:1 beträgt.

13. Verwendung nach einem der Ansprüche 1 bis 12, wobei das Polykondensationsprodukt in Form eines Kammpolymers mit Novolak-Struktur vorliegt.

14. Verwendung nach einem der Ansprüche 1 bis 13, wobei das Polykondensationsprodukt ein Molekulargewicht im Bereich von 1000 bis 100000, vorzugsweise 2000 bis 75000 und insbesondere 4000 bis 50000 g/mol aufweist.

15. Verwendung nach einem der Ansprüche 1 bis 14, **dadurch gekennzeichnet, dass** die alkaliaktivierten Alumosilikatbindemittel latent hydraulische und/oder puzzolanische Bindemittel sowie alkalische Aktivatoren wie z.B. wässrige Lösungen von Alkalicarbonaten, Alkalifluoriden, Alkalihydroxiden, Alkalialuminaten, Alkalisilikaten wie z.B. löslichem Wasserglas, sowie Mischungen davon umfassen, wobei die latent hydraulischen Bindemittel aus industriellen und/oder synthetischen Schlacken, insbesondere aus Hochofenschlacke, Hüttensand, Hüttensandmehl, elektrothermischer Phosphorschlacke, Edelstahlschlacke, sowie Mischungen davon ausgewählt sind,
und die puzzolanischen Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen, sowie Mischungen davon ausgewählt sind.

16. Verwendung nach einem der Ansprüche 1 bis 15 als Bestandteil von Baustoffrezepturen und/oder Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Estrichen, Spachtel- und Verlaufsmassen, Fliesenklebern, Putzen, Kleb- und Dichtstoffen, Beschichtungssystemen, insbesondere für Tunnel, Abwasserkanäle, Spritzschutz und Kondensatleitungen, Trockenmörteln, Fugenmörteln, Drainagemörteln und/oder Reparaturmörteln.

## Claims

1. Use of a polycondensation product consisting of the following monomer components:
A) at least one aryl polyoxyalkylene ether of the formula (I) 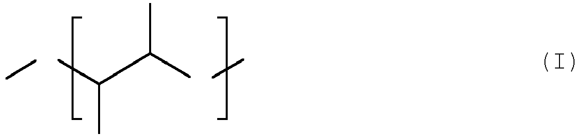 where
Ar is an aryl group,
R₁ and R₂ each independently of one another are selected from H, methyl and ethyl, with preferably at least one of the groups R₁ and R₂ being H,
m is an integer from 1 to 300 and
R₃ is selected from the group consisting of H, alkyl, aryl, aralkyl, alkaryl, phosphate, and also mixtures thereof;
B) at least one aromatic compound of the formula (II), 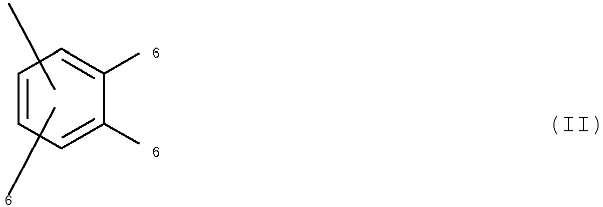 where R₄ and R₅ each independently of one another are selected from H, R₈, OH, OR₈, C(O)R₈, COOH, COOR₈, SO₃H, SO₃R₈ and NO₂ and also alkali metal salts, alkaline earth metal salts and ammonium salts thereof, or together are a further fused-on ring, where R₈ each independently is selected from the group consisting of alkyl, aryl, aralkyl, alkaryl, and R₆ and R₇ each independently of one another are selected from OH, OR₉, C(O)R₉, COOH and COOR₉ and also alkali metal salts and alkaline earth metal salts and ammonium salts thereof, where R₉ each independently is selected from the group consisting of alkyl, aryl, aralkyl, alkaryl; and also
C) at least one aldehyde;
as a dispersant for aqueous suspensions of alkali-activated aluminosilicate binders.

2. Use according to Claim 1, **characterized in that** the group Ar is an aryl group having 6 to 10 carbon atoms in the ring system, more particularly a phenyl group or a naphthyl group.

3. Use according to Claim 1 or 2, **characterized in that** m is an integer from 3 to 280, preferably from 10 to 160 and more particularly from 12 to 120.

4. Use according to any of Claims 1 to 3, **characterized in that** R₃ is selected from the group consisting of H, C₁₋₁₀ alkyl, C₆₋₁₀ aryl, C₇₋₁₁ aralkyl, C₇₋₁₁ alkaryl and phosphate, with R₃ preferably being H.

5. Use according to Claim 3, **characterized in that** the oxyalkylene groups of the aryl polyoxyalkylene ether of the formula (I) are selected from ethylene oxide groups and/or propylene oxide groups, which are arranged randomly, alternatingly, graduatedly and/or blockwise along the chain.

6. Use according to Claim 3, **characterized in that** the aryl polyoxyalkylene ether of the formula (I) is a polyethylene glycol monophenyl ether of the formula (III), 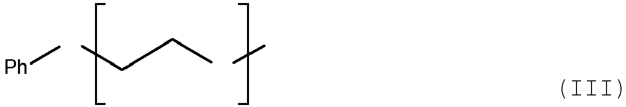 where m has the specified definition.

7. Use according to Claim 6, **characterized in that** the polyethylene glycol monophenyl ether of the formula (III) is a mixture with different values for m within the specified definition.

8. Use according to any of Claims 1 to 7, **characterized in that** R₈ and R₉ each independently are selected from C₁₋₁₀ alkyl, C₆₋₁₀ aryl, C₇₋₁₁ aralkyl and C₇₋₁₁ alkaryl and are preferably H.

9. Use according to any of Claims 1 to 8, **characterized in that** the aromatic compound of the formula (II) is selected from the group consisting of benzene-1,2-diol, benzene-1,2,3-triol, 2-hydroxybenzoic acid, 2,3- and 3,4-dihydroxybenzoic acid, 3,4,5-trihydroxybenzoic acid, phthalic acid, 3-hydroxyphthalic acid, 2,3- and 3,4-dihydroxybenzenesulphonic acid, 1,2- and 2,3-dihydroxynaphthalene, 1,2- and 2,3-dihydroxynaphthalene-5- or -6-sulphonic acid, and also mixtures thereof.

10. Use according to any of Claims 1 to 9, **characterized in that** the aldehyde component C) is selected from the group consisting of formaldehyde, paraformaldehyde, glyoxylic acid, benzaldehyde, benzaldehydesulphonic acid, benzaldehydedisulphonic acid, vanillin and isovanillin, and also mixtures thereof.

11. Use according to any of Claims 1 to 10, **characterized in that** the molar ratio of components C:(A+B) is from 1:3 to 3:1, preferably 1:2 to 2:1 and more particularly 1:0.9 to 1:1.1.

12. Use according to any of Claims 1 to 11, **characterized in that** the molar ratio of components A:B is from 1:10 to 10:1, preferably 1:7 to 5:1 and more particularly 1:5 to 3:1.

13. Use according to any of Claims 1 to 12, the polycondensation product being present in the form of a comb polymer with novolak structure.

14. Use according to any of Claims 1 to 13, the polycondensation product having a molecular weight in the range from 1000 to 100 000, preferably 2000 to 75 000 and more particularly 4000 to 50 000 g/mol.

15. Use according to any of Claims 1 to 14, **characterized in that** the alkali-activated aluminosilicate binders comprise latent hydraulic and/or pozzolanic binders and also alkaline activators, such as aqueous solutions of alkali metal carbonates, alkali metal fluorides, alkali metal hydroxides, alkali metal aluminates, alkali metal silicates, such as soluble waterglass, and also mixtures thereof, where
the latent hydraulic binders are selected from industrial and/or synthetic slags, more particularly from blast furnace slag, slag sand, ground slag sand, electrothermic phosphorus slag, stainless-steel slag, and also mixtures thereof,
and the pozzolanic binders are selected from amorphous silica, preferably precipitated silica, pyrogenic silica and microsilica, finely ground glass, fly ash, preferably brown-coal fly ash and mineral-coal fly ash, metakaolin, natural pozzolans such as tuff, trass and volcanic ash, natural and synthetic zeolites, and also mixtures thereof.

16. Use according to any of Claims 1 to 15 as a constituent of construction material formulations and/or construction material products such as on-site concrete, pre-cast concrete parts, concrete ware, cast concrete stones and also in-situ concrete, air-placed concrete, ready-mixed concrete, construction adhesives and adhesives for thermal insulation composite systems, concrete repair systems, one-component and two-component sealing slurries, screeds, filling and levelling compounds, tile adhesives, renders, adhesives and sealants, coating systems, more particularly for tunnels, wastewater channels, splash protection and condensate lines, dry mortars, joint grouts, drainage mortars and/or repair mortars.

## Revendications

1. Utilisation d'un produit de polycondensation, constitué par les composants monomères suivants, à savoir :
A) au moins un éther d'arylpolyoxyalkylène de formule (I) 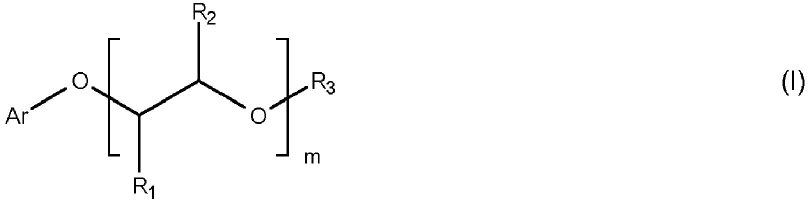 dans laquelle
Ar est un groupe aryle,
R₁ et R₂ sont chacun choisis indépendamment l'un de l'autre parmi H, méthyle et éthyle, au moins un des groupes R₁ et R₂ représentant de préférence H,
m est un nombre entier de 1 à 300, et
R₃ est choisi dans le groupe constitué par H, alkyle, aryle, aralkyle, alkaryle, phosphate, ainsi que leurs mélanges ;
B) au moins un composé aromatique de formule (II), 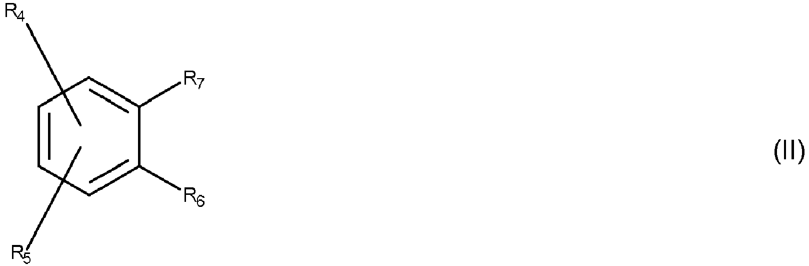 dans laquelle R₄ et R₅ sont chacun choisis indépendamment l'un de l'autre parmi H, R₈, OH, OR₈, C(O)R₈, COOH, COOR₈, SO₃H, SO₃R₈ et NO₂, ainsi que leurs sels alcalins, alcalino-terreux et d'ammonium, ou représentent ensemble un cycle annelé supplémentaire, les R₈ étant chacun choisis indépendamment dans le groupe constitué par alkyle, aryle, aralkyle, alkaryle, et R₆ et R₇ sont chacun choisis indépendamment l'un de l'autre parmi OH, OR₉, C(O)R₉, COOH et COOR₉, ainsi que leurs sels alcalins et alcalino-terreux et d'ammonium, les R₉ étant chacun choisis indépendamment dans le groupe constitué par alkyle, aryle, aralkyle et alkaryle ; ainsi que
C) au moins un aldéhyde ;
en tant que dispersant pour des suspensions aqueuses de liants alumosilicates activés par un alcali.

2. Utilisation selon la revendication 1, **caractérisée en ce que** le groupe Ar est un groupe aryle de 6 à 10 atomes de carbone dans le système cyclique, notamment un groupe phényle ou naphtyle.

3. Utilisation selon la revendication 1 ou 2, **caractérisée en ce que** m est un nombre entier de 3 à 280, de préférence de 10 à 160 et notamment de 12 à 120.

4. Utilisation selon l'une quelconque des revendications 1 à 3, **caractérisée en ce que** R₃ est choisi dans le groupe constitué par H, alkyle en C₁₋₁₀, aryle en C₆₋₁₀, aralkyle en C₇₋₁₁, alkaryle en C₇₋₁₁ et phosphate, R₃ étant de préférence H.

5. Utilisation selon la revendication 3, **caractérisée en ce que** les groupes oxyalkylène de l'éther d'arylpolyoxyalkylène de formule (I) sont choisis parmi les groupes oxyde d'éthylène et/ou oxyde de propylène, qui sont agencés statistiquement, en alternance, graduellement et/ou séquentiellement le long de la chaîne.

6. Utilisation selon la revendication 3, **caractérisée en ce que** l'éther d'arylpolyoxyalkylène de formule (I) est un éther monophénylique de polyéthylène glycol de formule (III) 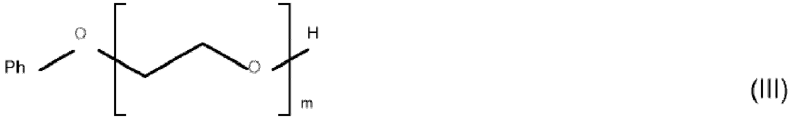 dans laquelle m a la signification indiquée.

7. Utilisation selon la revendication 6, **caractérisée en ce que** l'éther monophénylique de polyéthylène glycol de formule (III) est un mélange avec différentes valeurs de m dans le cadre de la signification indiquée.

8. Utilisation selon l'une quelconque des revendications 1 à 7, **caractérisée en ce que** R₈ et R₉ sont chacun choisis indépendamment parmi alkyle en C₁₋₁₀, aryle en C₆₋₁₀, aralkyle en C₇₋₁₁ et alkaryle en C₇₋₁₁, et sont de préférence H.

9. Utilisation selon l'une quelconque des revendications 1 à 8, **caractérisée en ce que** le composé aromatique de formule (II) est choisi dans le groupe constitué par le benzène-1,2-diol, le benzène-1,2,3-triol, l'acide 2-hydroxybenzoïque, l'acide 2,3- et 3,4-dihydroxybenzoïque, l'acide 3,4,5-trihydroxybenzoïque, l'acide phtalique, l'acide 3-hydroxyphtalique, l'acide 2,3- et 3,4-dihydroxybenzènesulfonique, la 1,2- et 2,3-dihydroxynaphtaline, l'acide 1,2- et 2,3-dihydroxynaphtaline-5- ou -6-sulfonique, ainsi que leurs mélanges.

10. Utilisation selon l'une quelconque des revendications 1 à 9, **caractérisée en ce que** le composant aldéhyde C) est choisi dans le groupe constitué par le formaldéhyde, le paraformaldéhyde, l'acide glyoxylique, le benzaldéhyde, l'acide benzaldéhyde-sulfonique, l'acide benzaldéhyde-disulfonique, la vaniline et l'isovaniline, ainsi que leurs mélanges.

11. Utilisation selon l'une quelconque des revendications 1 à 10, **caractérisée en ce que** le rapport molaire entre les composants C:(A+B) est de 1:3 à 3:1, de préférence de 1:2 à 2:1 et notamment de 1:0,9 à 1:1,1.

12. Utilisation selon l'une quelconque des revendications 1 à 11, **caractérisée en ce que** le rapport molaire entre les composants A:B est de 1:10 à 10:1, de préférence de 1:7 à 5:1 et notamment de 1:5 à 3:1.

13. Utilisation selon l'une quelconque des revendications 1 à 12, dans laquelle le produit de polycondensation se présente sous la forme d'un polymère en peigne de structure novolaque.

14. Utilisation selon l'une quelconque des revendications 1 à 13, dans laquelle le produit de polycondensation présente un poids moléculaire dans la plage allant de 1 000 à 100 000, de préférence de 2 000 à 75 000 et notamment de 4 000 à 50 000 g/mol.

15. Utilisation selon l'une quelconque des revendications 1 à 14, **caractérisée en ce que** les liants alumosilicates activés par un alcali comprennent les liants hydrauliques latents et/ou pouzzolaniques, ainsi que les activateurs alcalins, tels que p. ex. les solutions aqueuses de carbonates alcalins, de fluorures alcalins, d'hydroxydes alcalins, d'aluminates alcalins, de silicates alcalins, tels que p. ex. le verre soluble, ainsi que leurs mélanges, les liants hydrauliques latents étant choisis parmi les scories industrielles et/ou synthétiques, notamment les scories de hauts fourneaux, le laitier granulé, la farine de laitier granulé, les scories de phosphore électrothermiques, les scories d'acier inoxydable, ainsi que leurs mélanges,
et les liants pouzzolaniques étant choisis parmi la silice amorphe, de préférence la silice précipitée, la silice pyrogénée et la microsilice, la farine de verre, les cendres volantes, de préférence les cendres volantes de lignite et les cendres volantes de houille, le métakaolin, les pouzzolanes naturels tels que le tuf, le trass et les cendres volcaniques, les zéolithes naturelles et synthétiques, ainsi que leurs mélanges.

16. Utilisation selon l'une quelconque des revendications 1 à 15 en tant que constituant de formulations de matériaux de construction et/ou produits de matériaux de construction, tels que le béton de chantier, les éléments préfabriqués en béton, les produits en béton, les pierres de taille en béton, ainsi que le béton coulé en place, le béton projeté, le béton prêt à l'emploi, les colles de construction et les colles de systèmes composites d'isolation thermique, les systèmes de réparation de béton, les boues d'étanchéité monocomposantes et bicomposantes, les chapes, les enduits et les matériaux de nivellement, les colles à carreaux, les crépis, les agents adhésifs et d'étanchéité, les systèmes de revêtement, notamment pour tunnels, canaux d'eaux usées, protections anti-éclaboussure et conduites de condensat, les mortiers secs, les mortiers à joint, les mortiers drainants et/ou les mortiers de réparation.
